# EUROPÄISCHE PATENTSCHRIFT

(11) **EP 1 313 551 B1**
(45) Veröffentlichungstag und Bekanntmachung des Hinweises auf die Patenterteilung: **11.08.2004**
(21) Anmeldenummer: 01903779.5
(22) Anmeldetag: 16.02.2001
(51) Int. Cl.: B01J 19/00, B41J 2/045, B01L 3/02

(54) **VORRICHTUNG UND VERFAHREN ZUM BERÜHRUNGSLOSEN AUFBRINGEN VON MIKROTRÖPFCHEN AUF EIN SUBSTRAT**
DEVICE AND METHOD FOR THE NON-CONTACT APPLICATION OF MICRO-DROPLETS ON A SUBSTRATE
DISPOSITIF ET PROCEDE POUR DEPOSER SANS CONTACT DES MICROGOUTTELETTES SUR UN SUBSTRAT

(30) Priorität: 24.08.2000 DE 10041536
(43) Veröffentlichungstag der Anmeldung: 28.05.2003
(60) Teilanmeldung: 03027857.6
(73) Patentinhaber: Zengerle, Roland, 78050 Villingen-Schwenningen (DE); De Heij, Bas, 78086 Brigachtal (DE)
(72) Erfinder: Zengerle, Roland, 78050 Villingen-Schwenningen (DE); De Heij, Bas, 78086 Brigachtal (DE)
(74) Vertreter: Schoppe, Fritz, Dipl.-Ing.
(86) Internationale Anmeldenummer: PCT/EP2001/001747
(87) Internationale Veröffentlichungsnummer: WO 2002/016021

(56) Entgegenhaltungen:
- EP-A- 0 670 218
- WO-A-01/17669
- WO-A-98/51999
- US-A- 5 508 200

## Beschreibung

Die vorliegende Erfindung bezieht sich auf Vorrichtungen und Verfahren zum berührungslosen Aufbringen von Mikrotröpfchen auf ein Substrat und insbesondere auf solche Vorrichtungen und Verfahren, die das gleichzeitige Aufbringen einer Mehrzahl von Mikrotröpfchen ermöglichen.

Solche Vorrichtungen und Verfahren sind insbesondere geeignet, um sogenannte Biochips, bei denen eine Mehrzahl unterschiedlicher Analyte auf ein Substrat aufgebracht ist, um unterschiedliche Stoffe in einer unbekannten Probe nachzuweisen, zu erzeugen.

Die zunehmende Entschlüsselung der Genome von Menschen, Tieren und Pflanzen schafft eine Vielzahl neuer Möglichkeiten, von der Diagnose von genetisch bedingten Krankheiten bis hin zur wesentlich beschleunigten Suche nach pharmazeutisch interessanten Wirkstoffen. So werden beispielsweise die oben genannten Biochips künftig eingesetzt werden, um Lebensmittel hinsichtlich einer Vielzahl möglicher, gentechnisch veränderter Bestandteile zu untersuchen. In einem weiteren Anwendungsgebiet können derartige Biochips verwendet werden, um bei genetisch bedingten Krankheiten den genauen Gendefekt festzustellen, um daraus die ideale Strategie zur Behandlung der Krankheit abzuleiten.

Die Biochips, die für derartige Anwendungen verwendbar sind, bestehen in der Regel aus einem Trägermaterial, d.h. einem Substrat, auf welches eine Vielzahl unterschiedlicher Substanzen in Form eines Rasters, aufgebracht wird. Typische Rasterabstände in dem Array liegen zwischen 100 µm und 2.500 µm. Die Vielfalt der unterschiedlichen Substanzen, die als sogenannte Analyte bezeichnet werden, auf einem Biochip reicht je nach Anwendung von einigen wenigen unterschiedlichen Stoffen bis hin zu einigen 100.000 verschiedenen Stoffen pro Substrat. Mit jedem dieser unterschiedlichen Analyte kann ein ganz bestimmter Stoff in einer unbekannten Probe nachgewiesen werden.

Bringt man eine unbekannte Probenflüssigkeit auf einen Biochip auf, so treten bei bestimmten Analyten Reaktionen auf, die über geeignete Verfahren, beispielsweise eine Fluoreszenzerfassung detektiert werden können. Die Anzahl der unterschiedlichen Analyte auf dem Biochip entspricht dabei der Anzahl der unterschiedlichen Bestandteile in der unbekannten Probenflüssigkeit, die mit dem jeweiligen Biochip gleichzeitig analysiert werden können. Bei einem solchen Biochip handelt es sich somit um ein Diagnosewerkzeug, mit welchem eine unbekannte Probe gleichzeitig und gezielt hinsichtlich einer Vielzahl von Inhaltsstoffen untersucht werden kann.

Zum Aufbringen der Analyte auf ein Substrat, um einen solchen Biochip zu erzeugen, sind derzeit drei grundsätzlich verschiedene Verfahren bekannt. Diese Verfahren werden alternativ je nach benötigter Stückzahl der Biochips bzw. nach notwendiger Analytenzahl pro Chip eingesetzt.

Das erste Verfahren wird als "Contactprinting" bezeichnet, wobei bei diesem Verfahren ein Bündel aus Stahlkapillaren verwendet wird, die im Inneren mit verschiedenen Analyten gefüllt sind. Dieses Bündel aus Stahlkapillaren wird auf das Substrat gestempelt. Beim Abheben des Bündels bleiben die Analyte in Form von Mikrotröpfchen an dem Substrat haften. Bei diesem Verfahren wird die Qualität des Druckmusters allerdings sehr stark durch die Wirkung von Kapillarkräften bestimmt und hängt dadurch von einer Vielzahl von kritischen Parametern ab, beispielsweise der Qualität und der Beschichtung der Oberfläche des Substrats, der genauen Geometrie der Düse und vor allem von den verwendeten Medien. Daneben ist das Verfahren sehr anfällig gegenüber Verunreinigungen des Substrats sowie der Stahlkapillaren. Dieses eben beschriebene Verfahren eignet sich bis zu einer Analytenvielfalt von einigen 100 pro Substrat.

Bei einem zweiten Verfahren zum Erzeugen von Biochips, dem sogenannten "Spotting" werden meist sogenannte Mikrodispenser eingesetzt, die ähnlich wie Tintendrucker in der Lage sind, einzelne Mikrotröpfchen einer Flüssigkeit auf einen entsprechenden Steuerbefehl hin auf ein Substrat zu schießen. Ein solches Verfahren wird als "drop-on-demand" bezeichnet. Solche Mikrodispenser sind von einigen Firmen kommerziell erhältlich. Der Vorteil bei diesem Verfahren liegt darin, daß die Analyte berührungslos auf ein Substrat aufgebracht werden können, wobei der Einfluß von Kapillarkräften bedeutungslos ist. Ein wesentliches Problem besteht jedoch darin, daß es sehr teuer und überaus schwierig ist, eine Vielzahl von Düsen, die alle mit unterschiedlichen Medien versorgt werden, parallel, bzw. in einem Array, anzuordnen. Das limitierende Element ist hierbei die Aktorik sowie die Medienlogistik, die nicht in dem gewünschten Maße miniaturisierbar sind.

Als ein drittes Verfahren zur Herstellung von Biochips wird derzeit das sogenannte "Syntheseverfahren" verwendet, bei dem die Analyte, die in der Regel aus einer Kette aneinanderhängender Nukleinsäuren bestehen, chemisch auf dem Substrat hergestellt, also synthetisiert werden. Zur Abgrenzung der räumlichen Position der unterschiedlichen Analyte werden Verfahren verwendet, wie sie aus der Mikroelektronik bekannt sind, beispielsweise Lithographieverfahren mit Maskentechnik. Dieses Syntheseverfahren ist unter den genannten Verfahren mit Abstand das teuerste, wobei jedoch die größte Analytenvielfalt auf einem Chip herstellbar ist, in der Größenordnung von 100.000 verschiedenen Analyten pro Substrat.

Aus der DE 19802368 Cl ist eine Mikrodosiervorrichtung bekannt, die es ermöglicht, mehrere Mikrotröpfchen durch eine Mehrzahl von Düsenöffnungen auf ein Substrat aufzubringen. Jede Düsenöffnung ist über eine Fluidleitung mit einer Druckkammer verbunden, die wiederum über Fluidleitungen aus einem Reservoir mit Flüssigkeit befüllbar ist. Jede Druckkammer ist teilweise durch einen Verdränger begrenzt, der über eine Betätigungseinrichtung betätigbar ist, um eine Volumenverdrängung in der Druckkammer zu bewirken, um ein Tröpfchen aus einer Düsenöffnung auszustoßen. Gemäß der DE 19802368 C1 ist es notwendig, für jede Druckkammer eine separate Betätigungseinrichtung bestehend aus einem Verdränger, der direkt mit der zu dosierenden Flüssigkeit in Berührung steht, und einem zugehörigen Betätigungselement vorzusehen.

Aus der DE 3123796 A1 ist eine Tintenausstoßvorrichtung für einen Tintenstrahldrucker bekannt, bei der ein Puffermedium verwendet wird, um auf eine vor einer Düsenöffnung angeordnete Tintenschicht einzuwirken, um Tintentröpfchen aus der Düsenöffnung auszustoßen. Diese Druckschrift bezieht sich auf eine Ausstoßvorrichtung, die es ermöglicht, einzelne Tröpfchen aus einzelnen Ausstoßöffnungen auszustoßen.

Aus der noch unveröffentlichten deutschen Anmeldung DE 19913076 ist ein Druckkopf zum Aufbringen von Mikrotröpfchen auf ein Substrat bekannt, bei dem eine Mehrzahl von Düsen parallel zueinander angeordnet ist. Die Düsenenden stehen in Kontakt mit einer mit einem Puffermedium befüllten Druckkammer. Über das Puffermedium, das üblicherweise aus Luft besteht, ist ein Druckpuls auf von den Düsenöffnungen beabstandete Enden von an den Düsen gebildeten Flüssigkeitssäulen ausübbar, so daß gleichzeitig eine Mehrzahl von Mikrotröpfchen von den Düsen abgegeben werden kann. Zu diesem Zweck ist gemäß der DE 19913076 eine Druckerzeugungseinrichtung zum Erzeugen des Druckpulses erforderlich. Der Druckpuls kann beispielsweise dadurch erzeugt werden, daß ein eingeschlossenes Volumen komprimiert wird. Entsprechend dem Verhalten von kompressiblen Medien, wie z.B. Luft, führt eine Volumenverringerung in der Druckkammer zu einem Druckanstieg in derselben. Dieses Auslösen der Düsen über einen Druckpuls besitzt jedoch einige Nachteile. So limitiert beispielsweise die Kompressibilität des Puffermediums die Geschwindigkeit des zeitlichen Druckanstiegs, d.h. der Dynamik, sowie die Amplitude des Druckpulses. Dies führt dazu, daß aus engeren Düsen unter Verwendung des Systems nach der DE 19913076 höherviskose Medien oft nicht mehr dosiert werden können. Ein weiterer Nachteil besteht darin, daß die Reaktion einer Düse auf einen definierten Druckpuls je nach Düsengeometrie, d.h. Strömungswiderstand, Induktivität usw., sowie Medium, d.h. Viskosität, Oberflächenspannung usw. desselben, ganz unterschiedlich ausfallen kann. Eine Düse mit einem kleineren Düsendurchmesser besitzt beispielsweise einen größeren Strömungswiderstand, so daß die Flüssigkeit in dieser Düse bei gleichem Druckpuls sehr viel langsamer in Bewegung gesetzt wird und unter Umständen nicht mehr die notwendige Geschwindigkeit von ca. 1-2 m/s erreicht, die erforderlich wäre, damit ein Flüssigkeitstropfen an der Düse abreißen kann.

Zusammenfassend kann festgestellt werden, daß bei dem in der nicht vorveröffentlichten DE 19913076 offenbarten Lösungsansatz verschiedenartige Düsen je nach Geometrie und darin enthaltener Flüssigkeit auf die Beaufschlagung mit ein und demselben Druck ganz unterschiedlich reagieren, so daß das Verfahren, bei dem eine Mehrzahl von Mikrotröpfchen aus unterschiedlichen Düsen mit einer Druckerzeugungseinrichtung ausgelöst wird, nicht optimal ist.

Aus der EP-A-670218 ist eine Vorrichtung zum Ausstoßen von Tinte durch eine Mehrzahl von Düsenöffnungen bekannt. Eine solche Vorrichtung umfaßt eine Düsenplatte mit einer Mehrzahl von Düsenöffnungen, eine Kanalplatte, eine elastische Platte, eine Druckplatte und ein Betätigungsglied. In der elastischen Platte sind Ausnehmungen vorgesehen, die in der Kanalplatte vorgesehenen Kanälen entsprechen, so daß diese Ausnehmungen zusammen mit den entsprechenden Kanälen in der Kanalplatte Druckkammern bilden. Wird nun durch das Betätigungsglied ein Druck auf die Druckplatte ausgeübt, wird die elastische Platte komprimiert, wodurch sich der Abstand zwischen Druckplatte und Düsenplatte verringert, so daß Tröpfchen aus den Düsenöffnungen ausgestoßen werden.

Aus der US-A-5508200 ist eine Mehrzahl von Dispenservorrichtungen bekannt. Eine erste Dispenservorrichtung arbeitet nach der Art einer Spritze. Eine zweite Dispenservorrichtung umfaßt einen piezoelektrischen Zylinder, der mit einer Schockwelle beaufschlagbar ist, um dadurch ein Tröpfchen an der Öffnung des Zylinders abzulösen. Schließlich ermöglicht eine dritte dort gezeigte Dispenservorrichtung das Ausstoßen von Tröpfchen durch eine Mehrzahl von Öffnungen, indem ein Druck in eine Druckkammer, die in Fluidverbindung zu jeder der Öffnungen ist, eingeleitet wird.

Aus der nachveröffentlichten WO-A-01/17669 ist ein System zum Aufbringen einer Mehrzahl von Mikrotröpfchen auf ein Substrat bekannt, bei dem durch ein Puffermedium, mit dem eine Druckkammer befüllt ist, ein Druck auf von Düsenöffnungen beabstandete Enden von Flüssigkeitssäulen ausgeübt wird.

Aus der WO-A-98/51999 ist ein Druckarray bekannt, das Reservoire in einer Reservoirschicht, Mikroventile in einer Verteilerschicht und elektrohydrodynamische Pumpen mit einem Paar von Elektroden aufweist, um selektiv Fluid, insbesondere Tinte, von den Reservoiren auf eine Aufnahmeoberfläche auszustoßen.

Die Aufgabe der vorliegenden Erfindung besteht darin, Vorrichtungen und Verfahren zu schaffen, die es ermöglichen, unter Verwendung eines einfachen Aufbaus gleichzeitig eine Mehrzahl von Mikrotröpfchen aus einer Mehrzahl von Düsenöffnungen definiert auszustoßen.

Diese Aufgabe wird durch eine Vorrichtung nach Anspruch 1 sowie ein Verfahren gemäß Anspruch 16 gelöst.

Die vorliegende Erfindung basiert auf der Erkenntnis, daß es vorteilhaft ist, den Ausstoß von Mikrotröpfchen durch eine Mehrzahl von Düsenöffnungen nicht durch einen Druckpuls, sonde-n durch eine direkte Verdrängung auszulösen. Erfindungsgemäß wird ein Wandlerprinzip verwendet, bei dem die Bewegung eines externen Aktors direkt auf die in den Düsen enthaltene Flüssigkeit übertragen wird. Damit läßt sich eine definierte Menge von Flüssigkeit in jeder Düse optional sogar mit einem definierten zeitlichen Verhalten in Bewegung setzen.

Erfindungsgemäß ist lediglich eine Betätigungseinrichtung erforderlich, um über ein einzelnes verformbares Bauglied, das an alle Medienbereiche angrenzt, gleichzeitig den Ausstoß von Mikrotröpfchen aus den Düsenöffnungen zu bewirken.

Alternativ kann eine Mehrzahl von Düsenöffnungen jedoch auch in einzelne Untermengen untergliedert sein. Jede Untermenge beinhaltet dabei ebenfalls noch eine Mehrzahl von Düsenöffnungen, wobei jede der Untermengen separat voneinander ausgelöst werden kann.

Das verformbare Bauglied stellt eine Volumenverdrängungseinrichtung zur gleichzeitigen Volumenverdrängung in allen Medienbereichen der Mehrzahl von Düsenöffnungen dar, durch die eine mechanische Bewegung eines externen Aktors sehr viel effizienter in eine Bewegung der in den Düsen, d.h. den Medienbereichen mit den zugeordneten Düsenöffnungen, enthaltenen Flüssigkeiten übertragen wird. Da erfindungsgemäß im wesentlichen die Verformung vorgegeben wird und nicht der Druck, werden auch Flüssigkeiten mit unterschiedlicher Viskosität in den Düsen nahezu identisch in Bewegung gesetzt.

Erfindungsgemäß wird somit jeweils eine Mehrzahl von Mikrotröpfchen unter Verwendung einer direkten Verdrängung, wobei ein verformbares Bauglied entweder direkt an die zu dosierende Flüssigkeit angrenzt oder über ein Puffermedium and dieselbe angrenzt, auf ein Substrat aufgebracht.

Bei bevorzugten Ausführungsbeispielen der Erfindung besteht das verformbare Bauglied bzw. das verformbare Dosierkopfsubstrat aus einem verformbaren, nahezu inkompressiblen Medium, um dadurch eine definierte Volumenverdrängung bewirken zu können. Ein bevorzugtes Material, das diesen Anforderungen genügt, ist beispielsweise ein Elastomer, z.B. Gummi oder Silikon.

Weiterbildungen der vorliegenden Erfindung sind in den abhängigen Ansprüchen definiert.

Bevorzugte Ausführungsbeispiele der vorliegenden Erfindung werden nachfolgend bezugnehmend auf die beiliegenden Zeichnungen näher erläutert. Es zeigen:
- Fig. 1: eine schematische Querschnittansicht eines ersten Ausführungsbeispiels der vorliegenden Erfindung;
- Fig. 1a und 1b: Variationen des in Fig. 1 dargestellten Ausführungsbeispiels;
- Fig. 2: eine schematische Querschnittansicht eines Ausschnitts des Ausführungsbeispiels von Fig. 1;
- Fig. 2a: eine schematische Querschnittansicht eines Ausschnitts einer Variation des in Fig. 2 gezeigten Ausführungsbeispiels;
- Fig. 3, 4, 4a, 4b, 4c, 5, 5a und 6 bis 11: schematische Querschnittansichten jeweiliger Ausführungsbeispiele von erfindungsgemäßen Vorrichtungen zum Aufbringen von Mikrotröpfchen;
- Fig. 12: eine schematische Draufsicht auf ein Dosierkopfsubstrat, das bei einer erfindungsgemäßen Vorrichtung zum Aufbringen von Mikrotröpfchen verwendet werden kann;
- Fig. 13a und 13b: schematische Querschnittansichten eines Beispiels einer anderen Vorrichtung zum Aufbringen von Mikrotröpfchen;
- Fig. 14 bis 16: schematische Darstellungen zur Erläuterung der Betätigung der erfindungsgemäßen Vorrichtungen; und
- Fig. 17: eine schematische Querschnittansicht eines weiteren Ausführungsbeispiels der vorliegenden Erfindung.

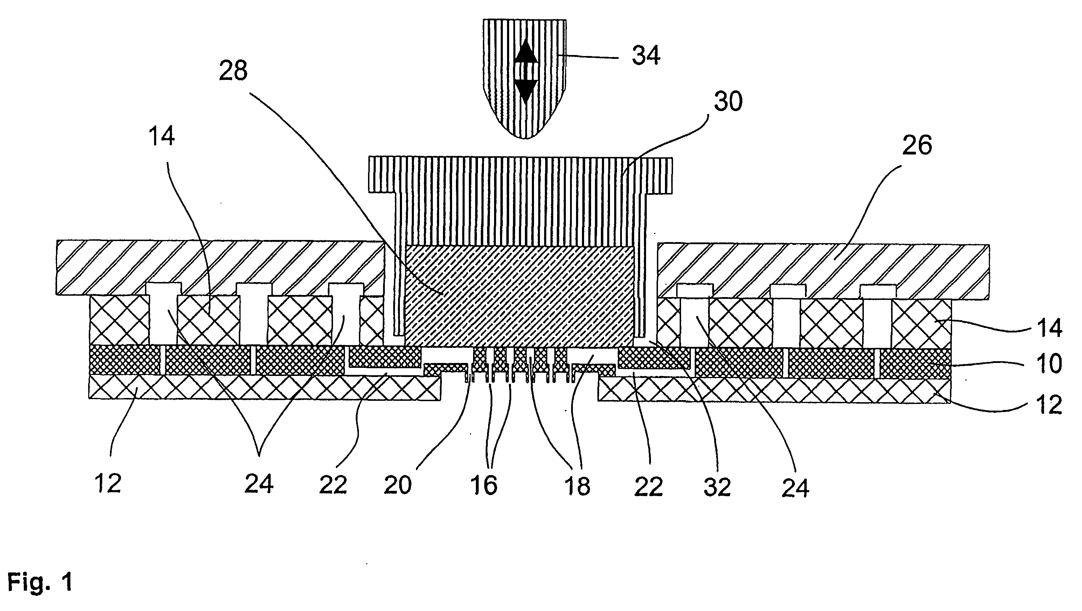

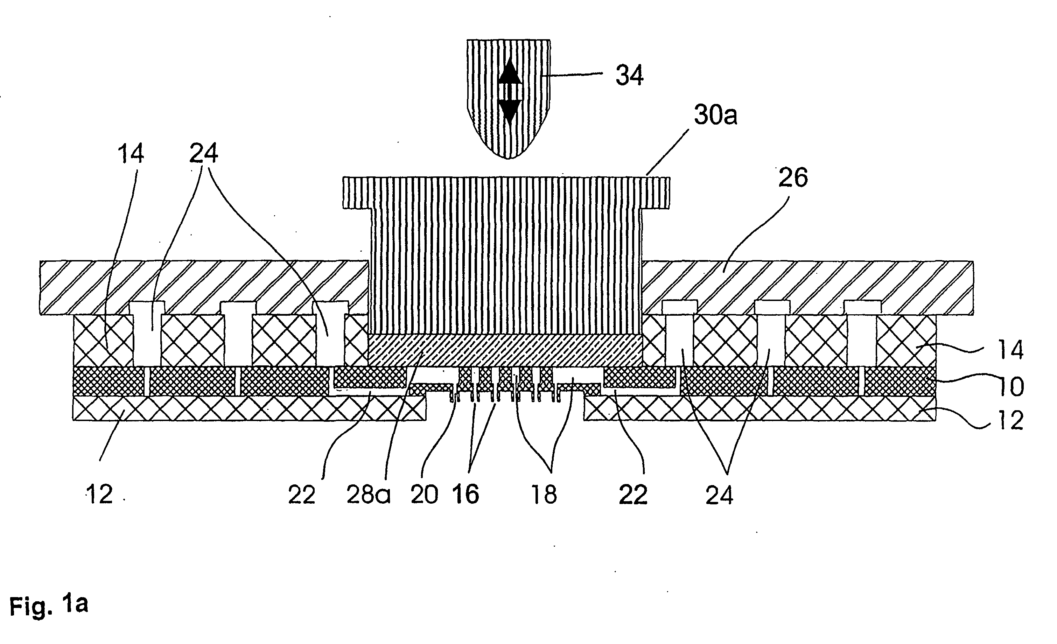

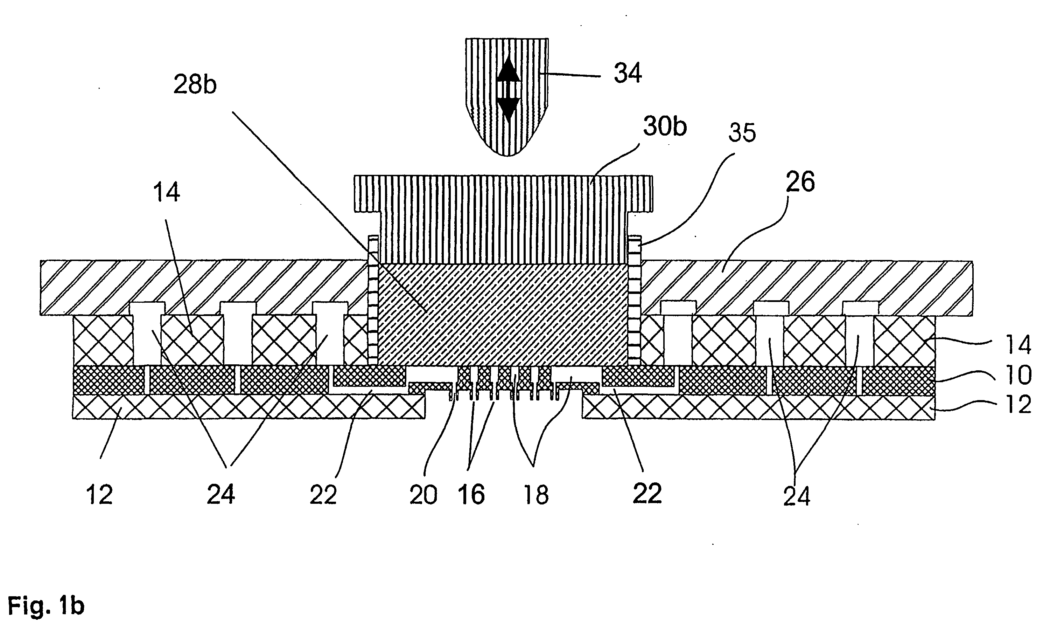

In Fig. 1 ist ein Ausführungsbeispiel einer erfindungsgemäßen Vorrichtung zum Aufbringen einer Mehrzahl von Mikrotröpfchen auf ein Substrat gezeigt, bei der ein Dosierkopf aus drei funktionellen Lagen gebildet ist, einem Dosierkopfsubstrat bzw. einer Strukturplatte 10 und zwei Deckplatten 12 und 14.

In der Strukturplatte 10 sind, beispielsweise unter Verwendung herkömmlicher mikromechanischer Verfahren, alle Mikrostrukturen der erfindungsgemäßen Vorrichtung gebildet.

In dem Dosierkopfsubstrat 10 ist eine Mehrzahl von Düsen gebildet, die in der Unterseite des Dosierkopfsubstrats 10 angeordnete Düsenöffnungen 16 aufweisen. Beispielsweise können 6 x 4 Düsenöffnungen in der Unterseite des Dosierkopfsubstrats 10 angeordnet sein. Wie in Fig. 1 gezeigt ist, sind oberhalb der Düsenöffnungen 16 in dem Dosierkopfsubstrat 10 Medienbereiche bzw. Medienabteile gebildet, die fluidmäßig mit den Düsenöffnungen 16 verbunden sind. Diese Medienbereiche sind bzw. werden mit einer zu dosierenden Flüssigkeit befüllt, so daß bei dem dargestellten Ausführungsbeispiel eine Flüssigkeitssäule eines zu dosierenden Mediums an jeder Düsenöffnung 16 gebildet ist bzw. wird. Die Medienbereiche umfassen bei dem dargestellten Ausführungsbeispiel einen Bereich 18, an den eine Volumenverdrängungseinrichtung, die später beschrieben wird, angrenzt, und einen Düsenbereich 20, der eine fluidmäßige Verbindung mit den Düsenöffnungen 16 herstellt.

Die jeweiligen Düsen besitzen vorzugsweise eine solche Größe, daß eine kapillare Befüllung derselben möglich ist. Alternativ können die Düsen beispielsweise über gravimetrische Verfahren, druckgesteuerte Verfahren und dergleichen befüllt werden. Die Düsenöffnungen sind ferner vorzugsweise derart in der Unterseite des Dosierkopfsubstrats 10 mikrostrukturiert, daß sie gegenüber der umgebenden Oberfläche exponiert sind. Das Dosierkopfsubstrat besteht vorzugsweise aus Silizium und ist unter Verwendung entsprechender Techniken strukturiert, kann jedoch auch aus einem spritzgegossenen Kunststoffmaterial oder dergleichen bestehen.

Wie in Fig. 1 gezeigt ist sind die Medienbereiche 18, 20 ferner über Versorgungsleitungen 22 mit Reservoirbereichen 24, die in der oberen Deckplatte 14 gebildet sind, verbunden. Es ist klar, daß die Versorgungsleitungen auf eine Vielzahl von Arten ausgestaltet sein können, wobei beispielsweise auch mehrere parallele Leitungen, die denselben Reservoirbereich mit demselben Medienbereich verbinden, vorgesehen sein können.

Jeder Medienbereich ist über eine solche Versorgungsleitung 22 mit einem jeweiligen Reservoirbereich 24 verbunden, wobei aufgrund der Querschnittdarstellung in Fig. 1 lediglich die Versorgungsleitung in zwei Medienbereiche dargestellt sind.

Oberhalb der oberen Deckplatte 14 ist bei dem dargestellten Ausführungsbeispiel eine optionale Deckelplatte 26 angeordnet, die als Kühlplatte ausgestaltet sein kann, um die Verdunstung zu reduzieren. Die bei diesem Ausführungsbeispiel vorgesehene untere Deckplatte 12 dient zur Abdeckung der Versorgungskanäle 22, sowie zur mechanischen Stabilisierung. Die obere Deckplatte 14 dient, wie oben ausgeführt, zur Vergrößerung bzw. zur Erzeugung von Reservoirbereichen und darüber hinaus ebenfalls zur mechanischen Stabilisierung.

Im mittleren Bereich der in Fig. 1 schematisch gezeigten Vorrichtung ist eine Volumenverdrängungseinrichtung als separate Komponente vorgesehen. Die Volumenverdrängungseinrichtung umfaßt ein verformbares Material 28, das bei dem dargestellten Ausführungsbeispiel in eine Fassung 30 eingebracht ist. Die Unterseite des verformbaren Materials ist auf die Rückseite der Düsen aufgesetzt, so daß das verformbare Bauglied bzw. das verformbare Material 28 an von den Düsenöffnungen 16 beabstandete Öffnungen der Medienbereiche 18 angrenzt. Die Fassung 30 umgibt das verformbare Bauglied größtenteils mit Ausnahme der Bereiche, in denen dasselbe an das Dosierkopfsubstrat 10 bzw. die ausgenommenen Bereichen desselben angrenzt, wobei jedoch bei dem dargestellten Ausführungsbeispiel ein freier Bereich 32 oberhalb des Dosierkopfsubstrats 10 vorgesehen ist, um eine Relativbewegung der Fassung 30 zu dem Dosierkopfsubstrat 10 zu ermöglichen. Eine solche Bewegung kann beispielsweise durch einen Piezostapel-Aktor 34 bewirkt werden. Alternativ können jedoch andere Betätigungseinrichtungen bzw. makroskopische Aktoren verwendet werden, beispielsweise Piezobiegewandler oder andere Piezomaterialien, elektromagnetische Antriebe, pneumatisch angetriebene Kolben, Kolben, die von einer mechanisch vorgespannten Feder angetrieben werden, und dergleichen.

In jedem Fall sind die Fassung 30 und das Dosierkopfsubstrat 10 derart ausgestaltet und zueinander angeordnet, daß eine Relativbewegung zwischen denselben möglich ist. Ferner ist das verformbare Bauglied 28 vorzugsweise derart zwischen der Fassung 30 und dem Dosierkopfsubstrat 10 angeordnet, daß die Rückseiten der Düsen, d.h. die dem verformbaren Bauglied 28 zugewandten Öffnungen der Medienbereiche 18, 20, sowie die Oberseiten der Versorgungsleitungen 22 gegeneinander abgedichtet sind, so daß keine Querkontamination von Flüssigkeiten aus unterschiedlichen Düsen stattfinden kann. Dies läßt sich beispielsweise auch dadurch erreichen, daß die Fassung mit dem verformbaren Bauglied auch im unbetätigten Zustand unter einer gewissen Vorspannung mit dem Dosierkopfsubstrat verbunden ist.

An dieser Stelle sei angemerkt, daß der Ausdruck Medienbereich bzw. Medienabteil hierin verwendet ist, um einen eine Flüssigkeit enthaltenden Bereich an der Düsenöffnung zu definieren, so daß durch das verformbare Bauglied eine Flüssigkeitsverdrängung aus diesem Bereich durch die Düsenöffnung möglich ist. Dabei ist es für die prinzipielle Funktionsweise unerheblich, an welchem exakten Ort des Medienbereichs die Verdrängung durch das verformbare Bauglied stattfindet.

In den Fig. 1a und 1b sind Variationen des in Fig. 1 dargestellten Ausführungsbeispiels gezeigt. Bei der in Fig. 1a gezeigten Variation ist ein verformbares Bauglied 28a in die Deckplatte 14 des Substrats 10 eingeschlossen, wobei nur die Oberseite des verformbaren Bauglieds 28a durch eine bewegliche Fassung 30a bedeckt ist. Bei der in Fig. 1b gezeigten Variation ist ein separates Bauglied 35 vorgesehen, an das ein verformbares Bauglied 28b an den Seitenflächen desselben angrenzt. Eine bewegliche Fassung 30b wirkt wiederum nur auf die Oberseite des verformbaren Bauglieds 28b ein.

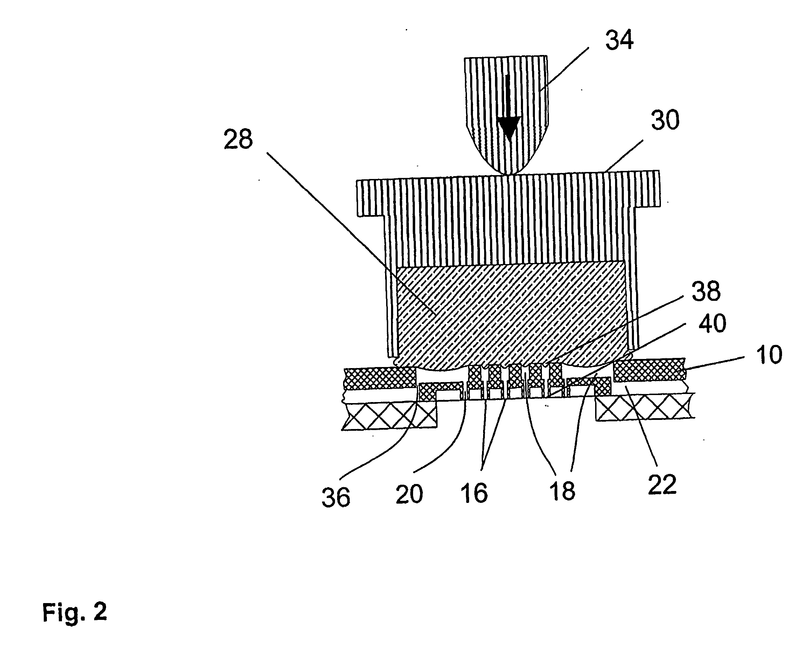

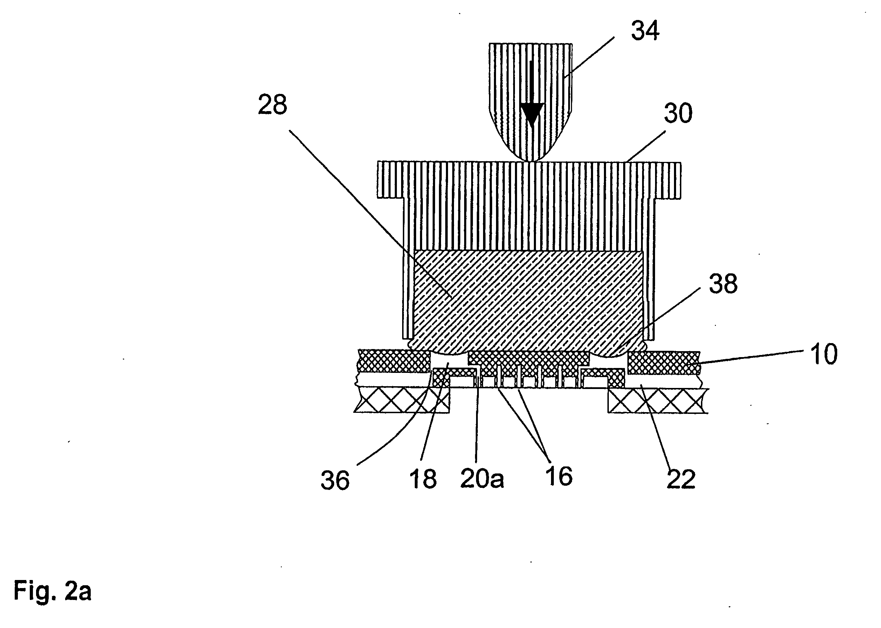

Im folgenden wird nun die Funktionsweise des in Fig. 1 dargestellten Ausführungsbeispiel bezugnehmend ferner auf Fig. 2 näher erläutert.

Im stationären Zustand, d.h. vor einem Ausstoßvorgang, befinden sich die Enden der in den den Düsen zugeordneten Medienbereichen angeordneten Flüssigkeiten an den Düsenöffnungen 16. Dabei sind, wie oben ausgeführt wurde, die Düsen vorzugsweise derart ausgestaltet, daß Kapillarkräfte die Flüssigkeiten bis zu den Düsenöffnungen hin bewegen, wobei an den Düsenöffnungen 16 Oberflächenkräfte, die aus der sich vergrößernden Oberfläche der Flüssigkeit bei Ausbilden eines Tropfens resultieren, die Flüssigkeit am Austreten aus den Düsenöffnungen 16 hindern.

Ferner sind die Versorgungsleitungen 22 vorzugsweise derart ausgestaltet, das eine rein kapillare Befüllung der Düsen aus den Reservoiren 24 möglich ist.

Ausgehend von diesem Zustand kann nun durch das Betätigungsglied 34, bei dem dargestellten Ausführungsbeispiel ein Piezostapel-Aktor, eine definierte Kraft, ein definierter Druck oder ein definierter Weg auf die Fassung 30 ausgeübt werden. Dadurch wird das verformbare Bauglied 28 gegen die Oberseite des Dosierkopfsubstrats 10 gedrückt, so daß, wie oben ausgeführt wurde, die Düsen gegeneinander abgedichtet werden. Dadurch wird verhindert, daß eine Querkontamination von Flüssigkeiten aus unterschiedlichen Düsen während des Ausstoßvorgangs stattfinden kann. Wird nun der Druck, die definierte Kraft oder der definierte Weg auf die Fassung 30 erhöht, wird sich das verformbare Material 28 zu einem definierten Anteil in die den jeweiligen Düsen zugeordneten Medienbereiche ausbreiten. Dabei wird eine definierte Flüssigkeitsmenge aus jeder Düse verdrängt. Diese Verformung des verformbaren Bauglieds 28, die in den Bereichen desselben stattfindet, die nicht durch die Fassung 30 bzw. das Dosierkopfsubstrat 10 bedeckt sind, ist in Fig. 2 gezeigt. Es ist klar, daß bei diesem Ausführungsbeispiel die Fassung 30 und das Dosierkopfsubstrat 10 aus einem im wesentlichen starren Material bestehen.

Geschieht der oben beschriebene Vorgang des Ausbreitens des verformbaren Bauglieds zu einem definierten Anteil in die jeweiligen Düsen mit einer genügend hohen Dynamik sowie einer genügend hohen Amplitude, so werden aus allen Düsen gleichzeitig Flüssigkeitströpfchen berührungslos auf ein darunterliegendes Substrat abgegeben. Durch die Volumenverdrängungseinrichtung, wie sie durch das erfindungsgemäße verformbare Bauglied gebildet ist, wird also die mechanische Bewegung eines externen Aktors effizient in eine Bewegung der in den Düsen enthaltenen Flüssigkeiten übertragen. Aufgrund der gezeigten Struktur wird im wesentlichen die Verformung bzw. die Volumenverdrängung vorgegeben, und nicht der Druck, so daß auch Flüssigkeiten mit unterschiedlicher Viskosität in den Düsen nahezu identisch in Bewegung gesetzt werden. Dies wird erfindungsgemäß durch die starre Fassung 30 ermöglicht, durch die sich Bereiche definieren lassen, in welche sich das verformbare Bauglied 28 bzw. das verformbare Material ausbreiten kann. Somit kann die Volumenverdrängung vor allem auf die Düsen und angeschlossenen Versorgungsleitungen fokussiert werden. Lediglich ein geringer Teil der Volumenänderung geht in dem Bereich 32 zwischen Fassung 30 und Dosierkopfsubstrat 10 sozusagen verloren, d.h. er trägt nicht zu dem Ausstoßen von Mikrotröpfchen bei.

Wie oben bereits erwähnt wurde, befinden sich im stationären Zustand die Flüssigkeiten durch Kapillarkräfte und Oberflächenkräfte an den Düsenöffnungen 16. Befinden sich die Flüssigkeiten bzw. die Enden der Flüssigkeitssäulen außerhalb des stationären Zustands, d.h. nicht an den Düsenöffnungen 16, so wirken Relaxationskräfte, die oben genannten Kapillarkräfte und Oberflächenkräfte, die diesen Zustand wieder herzustellen suchen. Die Zeitkonstanten für diese Relaxationen hängen sowohl von den Strömungswiderständen der jeweiligen Flüssigkeiten in den Düsen als auch von den Strömungswiderständen in den Medienzuleitungen, d.h. in den Versorgungsleitungen 22, zu den Düsen sowie von der Masse der in den Medienzuleitungen enthaltenen Flüssigkeiten ab. Eine entscheidende Voraussetzung für die Abgabe von Flüssigkeitströpfchen ist nun, daß die Volumenverdrängung des verformbaren Materials in den Düsen schneller erfolgt als die Relaxation der Flüssigkeitsströmungen. Zum Ausstoßen von Mikrotröpfchen aus den Düsenöffnungen 16 spielt somit neben der von dem verformbaren Bauglied 28 erzeugten Verdrängung als solcher vor allem die rasche Änderung der von dem verformbaren Bauglied 28 erzeugten Verdrängung eine entscheidende Rolle.

Die dosierte Menge der an den Düsenöffnungen ausgestoßenen Flüssigkeit kann über eine Variation der Kraft, des Wegs oder des erzeugten Drucks des Aktors 34, der über die starre Fassung 30 das verformbare Bauglied 28 verdrängt, erfolgen. Darüber hinaus kann die Dosiermenge eingestellt werden, indem die Dynamik, mit der das verformbare Bauglied angetrieben wird, d.h. insbesondere die auf die Flüssigkeit in den Düsen aufgeprägte Geschwindigkeit, variiert wird.

Durch die Verformung des verformbaren Bauglieds 28 in die den Düsen zugeordneten Medienbereiche werden entsprechend gemäß der obigen Beschreibung Mikrotröpfchen aus den Düsenöffnungen 16 ausgestoßen. Dabei wird Flüssigkeit aus den den jeweiligen Düsenöffnungen zugeordneten Medienbereichen verdrängt, wobei auch Flüssigkeit aus den Versorgungsleitungen 18 verdrängt wird. Ein bestimmter Volumenanteil der Verdrängung bewegt nun Flüssigkeit in Richtung der Düse, der verbleibende Anteil führt zu einer Rückströmung in Richtung der Reservoirs. Die absoluten Größen dieser Flüssigkeitsmengen hängen nun von mehreren Parametern ab, z.B. von der Amplitude der Verdrängung, den Strömungswiderständen und Induktivitäten. Entscheidend für die Funktion ist aber nun nicht, daß eine bestimmte Relation zwischen den Strömungswiderständen bzw. Induktivitäten zur Düse und den Reservoirs vorherrscht, bzw. die Relation genau bezifferbar ist. Vielmehr genügt allein, daß die Situation in irgendeiner Form definiert bzw. reproduzierbar ist. So würde z.B. auch schon ein Anteil von 20% der Verdrängung in Richtung Düse ausreichen, um dort Flüssigkeit auszustoßen.

Dabei ist es bevorzugt, daß die Versorgungskanäle zumindest einen Bereich 36 mit einem Strömungswiderstand aufweisen, um die den Düsen zugeordneten Medienbereiche, z.B. 18 und 20, von den Versorgungsleitungen 22 zu entkoppeln. Dadurch kann beispielsweise bewirkt werden, daß der Anteil der Verdrängung in Richtung Düse z.B. 80% beträgt. Dies ist jedoch keine zwingende Voraussetzung für die Funktion des Dosierkopfs.

Beispielsweise können die Versorgungsleitungen einen Bereich 36 aufweisen, der einen Strömungswiderstand besitzt, der höher als der Strömungswiderstand der Düsenkanäle 20 ist, so daß die Verformung des verformbaren Bauglieds 28 im wesentlichen zu einem Ausstoß von Mikrotröpfchen und nicht zu einem Rückfluß von Flüssigkeit durch die Versorgungskanäle 22 in die Reservoire 24 beiträgt. Eine Durchführungsöffnung 36, die einen definierten kleinen Strömungswiderstand aufweist, kann in einem Siliziumsubstrat vorzugsweise hergestellt werden, indem eine erste längliche Grabenstruktur einer definierten Breite und Tiefe in einer ersten Oberfläche des Substrats erzeugt wird und eine zweite längliche Grabenstruktur mit einer definierten Breite und Tiefe in einer zweiten der ersten Oberfläche gegenüberliegenden Oberfläche des Substrats erzeugt wird, derart, daß sich die erste und die zweite Grabenstruktur schneiden, so daß im Schnittbereich eine Öffnung mit der definierten Querschnittfläche vorliegt.

Alternativ dazu kann ein derartiger Strömungswiderstand auch durch eine lokale Einschnürung eines in einer Oberfläche verlaufenden Kanals erzeugt werden.

Bei bevorzugten Ausführungsbeispielen sind die Medienzuleitungen zu den Düsen, d.h. die dem verformbaren Bauglied 28 zugewandten Öffnungen der Bereiche 18 in dem Dosierkopfsubstrat 10, die von dem verformbaren Bauglied 28 begrenzt werden, so ausgeführt, daß sie identische Profile der Querschnitte 38 für die unterschiedlichen Düsen aufweisen. Dies führt dazu, daß an allen Düsen identische Verhältnisse bezüglich der Verdrängung des verformbaren Bauglieds 28 vorliegen. Daneben ist es möglich, über eine Anpassung der Querschnitte 38 in Fig. 2 das verdrängte Volumen in den einzelnen Düsen anzupassen. Insbesondere kann durch größere Querschnitte an einzelnen Düsen bei diesen auch eine größere Flüssigkeitsmenge abgegeben werden.

Darüber hinaus wird bei bevorzugten Ausführungsbeispielen der Durchmesser des Bereichs 18 der Düse an der Stelle 38 (Fig. 2), an der die Rückseite der Düse an das verformbare Bauglied 28 angrenzt, deutlich größer ausgeführt, als an der Stelle 40 (Fig. 2) des Flüssigkeitsaustritts, d.h. der Düsenöffnung 16. Dadurch läßt sich das verformbare Bauglied 28 einfacher in die Düsen hineinbewegen. Des weiteren stellt dies eine Art hydraulische Übersetzung dar, d.h. mit einer geringen axialen Bewegung des verformbaren Materials auf der Seite 38 des großen Düsendurchmessers wird eine große axiale Bewegung der Flüssigkeit auf der Seite 40 des kleinen Düsendurchmessers bewirkt.

In Fig. 2a ist eine Variation des in Fig. 2 gezeigten Ausführungsbeispiels gezeigt, wobei hier der Medienbereich 18, in den die Verdrängung durch das verformbare Bauglied 28 stattfindet, nicht direkt oberhalb den Düsen 16 angeordnet ist. Vielmehr ist hier ein eine Biegung bzw. einen Knick aufweisender Düsenkanal 20a zwischen Medienbereich 18 und Düsenöffnung 16 vorgesehen.

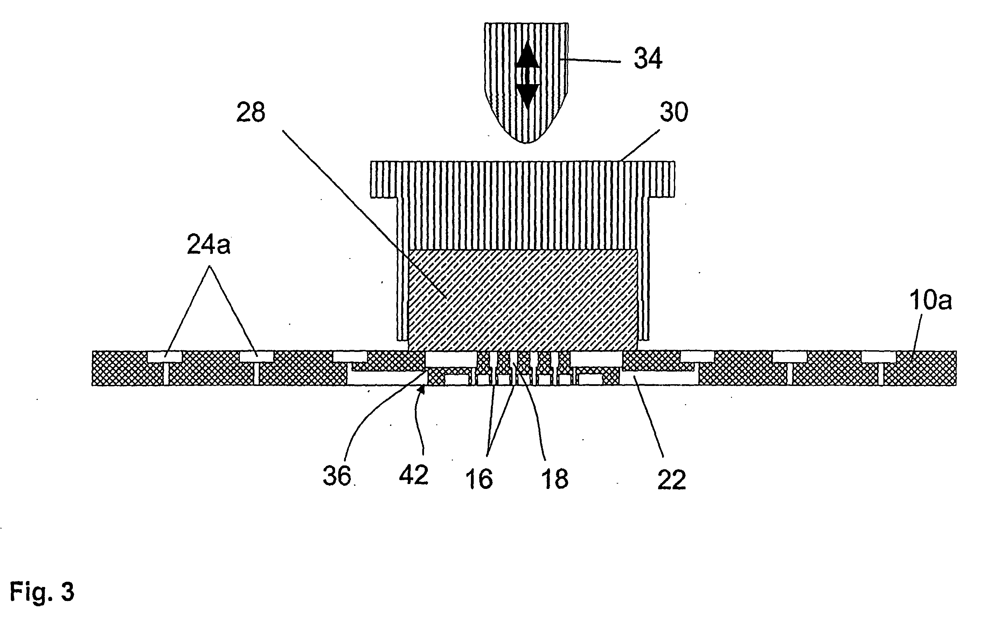

Im folgendem werden alternative Ausführungsbeispiele der Erfindung bezugnehmend auf die Fig. 3 bis 9 erläutert, wobei in diesen Figuren solche Elemente, die denen in Fig. 1 entsprechen mit gleichen Bezugszeichen bezeichnet sind.

In Fig. 3 ist ein Ausführungsbeispiel einer erfindungsgemäßen Vorrichtung gezeigt, das einen besonders einfachen einlagigen Aufbau besitzt. Bei dem in Fig. 3 dargestellten Ausführungsbeispiel sind Fluidreservoire 24a in der Oberseite eines Dosierkopfsubstrats 10a gebildet, wobei die Reservoire 24a über jeweilige Versorgungsleitungen 22 wiederum mit den jeweiligen Düsen bzw. denselben zugeordneten Medienbereichen verbunden sind. Da bei diesem Ausführungsbeispiel keine Deckplatten vorgesehen sind, müssen die Medienleitungen derart ausgestaltet sein, daß die Flüssigkeiten durch Kapillarkräfte in denselben gehalten werden. Ferner ist es bei diesem Ausführungsbeispiel erforderlich, daß ein enger Kanal 36 mit einem Strömungswiderstand oder einer Induktivität in jeder Versorgungsleitung 22 vorgesehen ist, der oder die größer ist als der entsprechende Parameter der an diese Versorgungsleitung angeschlossenen Düse. Dadurch kann verhindert werden, daß beim Erzeugen eines Mikrotröpfchenaustosses durch eine Verformung des verformbaren Bauglieds 28 in die Öffnungen in dem Dosierkopfsubstrat 10a Flüssigkeit über die Unterseite der Versorgungsleitungen 22, beispielsweise im Bereich 42 der Fig. 3, ausgestoßen wird. Eine Durchführungsöffnung mit einem definierten Querschnitt, um einen entsprechenden Strömungswiderstand festzulegen, kann auf die oben beschriebene Weise erzeugt werden.

Die Befüllung der Düsen erfolgt bei diesem Ausführungsbeispiel wiederum vorzugsweise ausschließlich durch Kapillarkräfte, die bewirken, daß die Flüssigkeit durch die Versorgungsleitungen zu der angeschlossenen Düse geleitet werden, an deren Öffnung wiederum Oberflächenenergie verhindert, daß Flüssigkeit austritt.

Die Volumenverdrängungseinrichtung bestehend aus dem verformbaren Bauglied 28, der Fassung 30 und dem Aktor 34 entspricht der bezugnehmend auf Fig. 1 beschriebenen Volumenverdrängungseinrichtung, wobei auch bezüglich der Funktionsweise des in Fig. 3 dargestellten Ausführungsbeispiel auf die entsprechende Beschreibung des in Fig. 1 gezeigten Ausführungsbeispiels verwiesen wird.

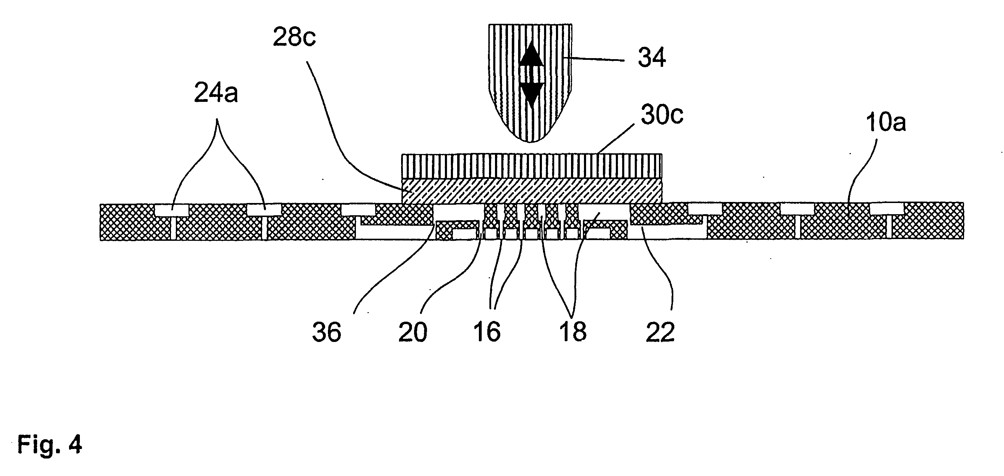

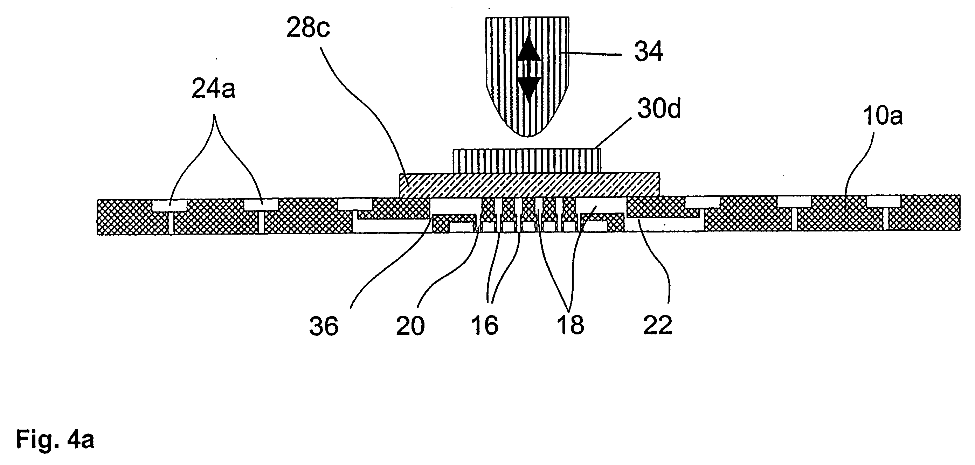

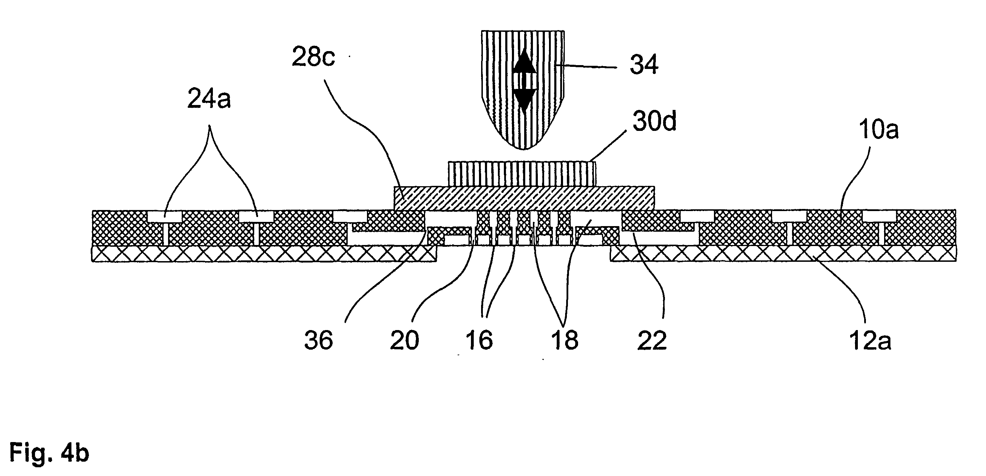

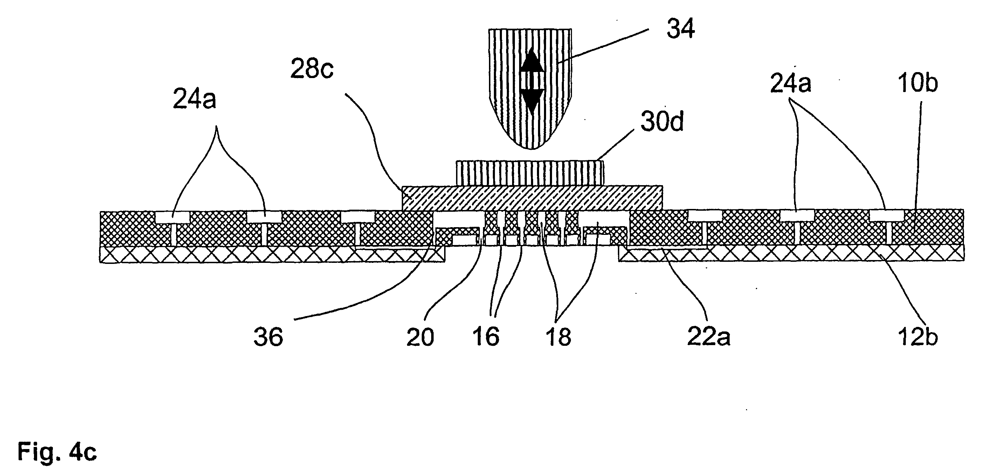

Fig. 4 zeigt ein Ausführungsbeispiel einer erfindungsgemäßen Vorrichtung mit einem modifizierten Verdränger, wobei der Aufbau der Dosierkopfsubstrats 10a dem in Fig. 3 gezeigten Aufbau entspricht. Es ist jedoch klar, daß ein Dosierkopf entsprechend einem anderen beschriebenen Ausführungsbeispiel bei dem Ausführungsbeispiel von Fig. 4 verwendet werden kann.

Bei dem in Fig. 4 gezeigten Ausführungsbeispiel besitzt ein verformbares Bauglied 28c eine flächige Ausgestaltung, beispielsweise in der Form einer Platte. In einem solchen Fall ist es ausreichend, als Fassung eine flache Platte 30c vorzusehen, die das rückseitige Ausweichen des verformbaren Bauglieds 28c verhindert. Die flächige Ausführung des verformbaren Bauglieds 28c an sich bewirkt, daß das Material desselben bei einer Betätigung des Aktors 34 vorzugsweise in die dem verformbaren Bauglied 28c zugewandten Ausnehmungen des Dosierkopfsubstrats 10a verformt wird, und nicht durch offene Seitenflächen, da die offenen Seitenflächen aufgrund der flächigen Ausgestaltung des verformbaren Bauglieds 28 inhärent klein sind. Im übrigen gelten die obigen Ausführungen hinsichtlich der Funktionsweise für das in Fig. 4 gezeigte Ausführungsbeispiel entsprechend.

Bei dem in Fig. 4a dargestellten Ausführungsbeispiel ist die Fassungsplatte bzw. Aktorplatte 30d klein genug, um zwischen die Durchführungsöffnungen 36 zu passen. Bei diesem Ausführungsbeispiel ist daher der fluidische Widerstand von geringerer Bedeutung. Gemäß Fig. 4b ist vergleichbar mit den in den Fig. 1, 1a, 1b, 2 und 2a gezeigten Ausführungsbeispielen eine Abdeckungsplatte 12a auf der unteren Oberfläche des Substrats 10a vorgesehen. Somit treten bei diesem Ausführungsbeispiele die Probleme hinsichtlich des Fluidwiderstands der Durchführungsöffnungen nicht auf. Gemäß dem in Fig. 4c gezeigten Ausführungsbeispiel sind Teile der Versorgungsleitungen 22a zu den Reservoiren 24a nicht in dem Substrat 10b sondern in der unteren Abdeckungsplatte 12b vorgesehen.

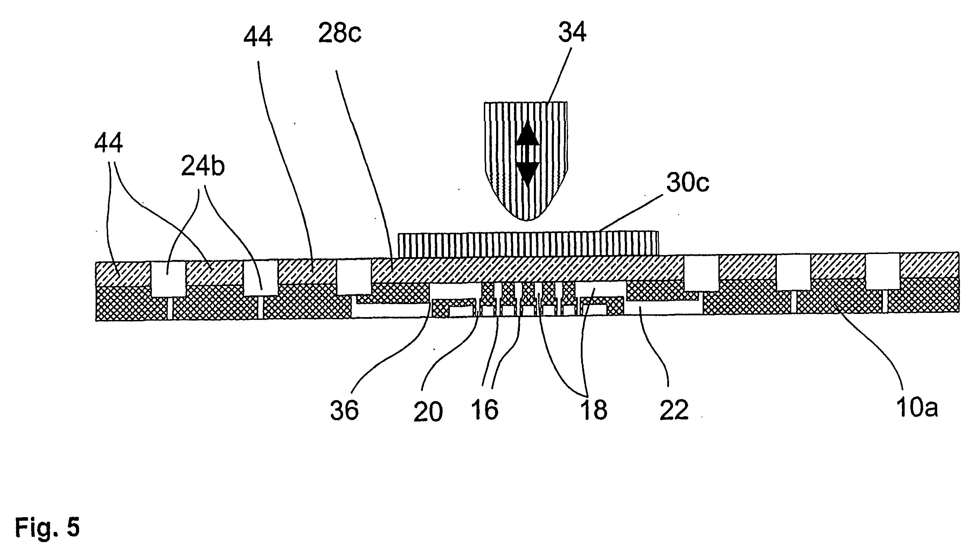

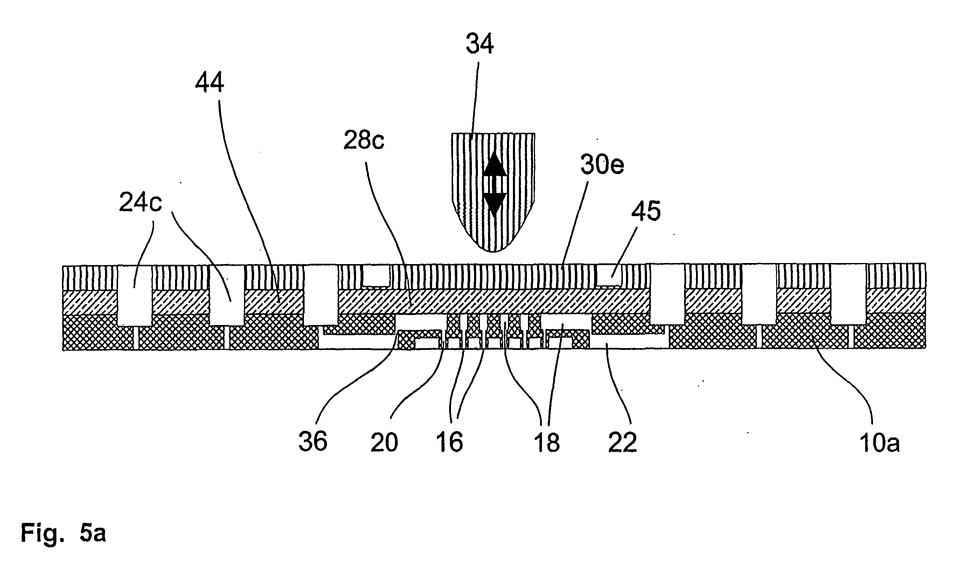

In Fig. 5 ist ein Ausführungsbeispiel gezeigt, das im wesentlichen dem von Fig. 4 entspricht, wobei jedoch das verformbare Bauglied 28c bis zu den Rändern des Dosierkopfsubstrats 10a hin verlängert ist, siehe die mit dem Bezugszeichen 44 in Fig. 5 bezeichneten Bereiche. Ferner sind in den verlängerten Bereichen des verformbaren Materials Aussparungen vorgesehen, die zusammen mit in dem Dosierkopfsubstrat 10a gebildeten Reservoirbereichen vergrößerte Reservoire 24b bilden. Vorteilhaft an dieser Ausführungsform ist das vergrößerte Füllvolumen der Reservoire, wobei das verformbare Material des verformbaren Bauglieds 28c beispielsweise durch Adhäsionskräfte oder Kleben angebracht sein kann.

Gemäß Fig. 5a ist das verformbare Bauglied 28c und die Gegenhaltevorrichtung 30e über den gesamten Dosierkopf ausgedehnt. Dadurch wird eine zusätzliche Vergrößerung der Reservoire 24c erreicht. Die Gegenhaltevorrichtung 30e ist derart strukturiert, daß der mittlere Bereich über den Düsen von dem restlichen Bereich entkoppelt ist und somit das verformbare Bauglied 28c lokal über dem Bereich der Düsen in die Medienabteile gedrückt werden kann. Zu diesem Zweck sind in der Gegenhaltevorrichtung 30e elastische Aufhängungen 45 vorgesehen.

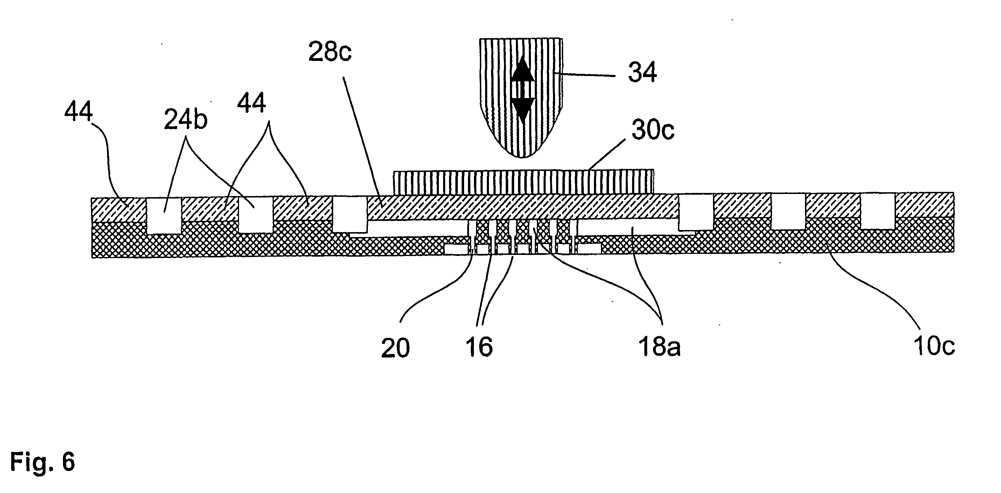

Fig. 6 zeigt eine Ausführungsform einer erfindungsgemäßen Vorrichtung, bei der Versorgungsleitungen 18a in der der Volumenverdrängungseinrichtung zugewandten Oberfläche eines Dosierkopfsubstrats 10c gebildet sind. In diesem Fall sind die einzig notwendigen Fluiddurchführungen in dem Dosierkopfsubstrat bzw. der Strukturplatte 10c die durch die Düsen gebildeten Fluiddurchführungen. Wie bereits oben ausgeführt, müssen für die Funktion der erfindungsgemäßen Vorrichtungen die Strömungswiderstände nicht klar bezifferbar sein, sondern lediglich reproduzierbar und in dieser Form definiert sein.

Es ist klar, daß bei den oben bezugnehmend auf die Fig. 1 bis 6 beschriebenen Ausführungsbeispielen zumindest Teile der Volumenverdrängungseinrichtung separat von dem Dosierkopf gebildet sein können. So kann gemäß den Fig. 1 bis 4 die gesamte Volumenverdrängungseinrichtung, die aus dem verformbaren Bauglied, der Gegenhalteeinrichtung, d.h. der Halterung 30 oder der Platte 30c, und dem Aktor besteht, separat von dem Dosierkopf aufgebaut sein, so daß diese Volumenverdrängungseinrichtung nacheinander für eine Mehrzahl von Dosierköpfen beispielsweise unter Verwendung von automatischen Positionierungseinrichtungen verwendet werden kann. Bei dem in den Fig. 5 und 6 gezeigten Ausführungsbeispiel können der Aktor 34 und die Gegenhalteeinrichtung 30c separat aufgebaut sein, so daß diese auf die oben genannte Art für einen Dosierkopf verwendet werden können, der aus Dosierkopfsubstrat 10a, 10b und aufgebrachter Schicht aus einem verformbaren Material besteht.

Es ist ferner klar, daß geeignete Vorrichtungen, beispielsweise Klemmvorrichtungen, verwendet werden können, um die jeweilige Anordnung in Position zu halten.

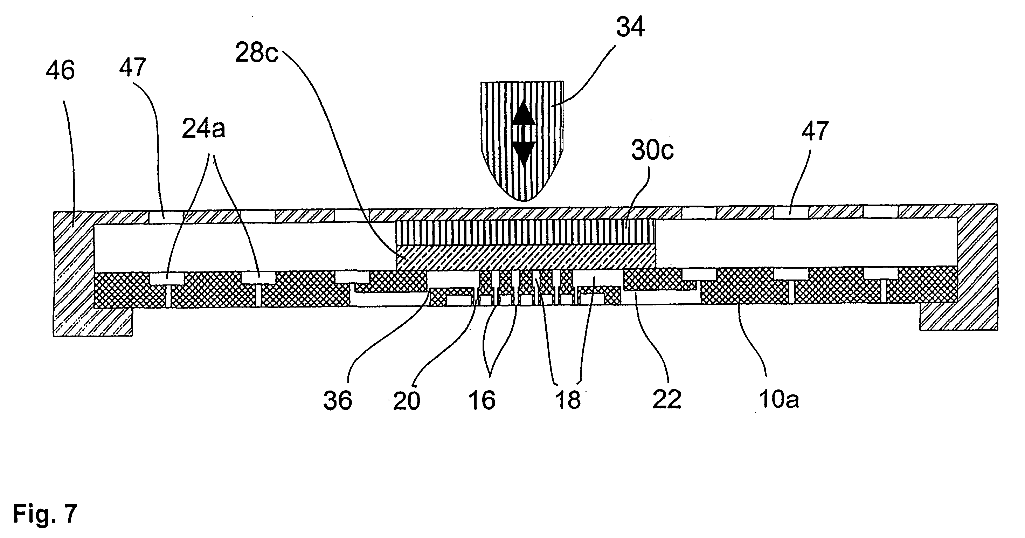

Beispielsweise zeigt Fig. 7 eine Klemmvorrichtung 46, die aus einem starren Material besteht, um den Verbund aus Dosierkopfsubstrat 10a, verformbarem Bauglied 28c und Gegenhalteplatte 30c zusammen zu halten. In diesem Fall wirkt der Aktor 34 auf die Oberseite der Klemmvorrichtung 46, so daß über die Gegenhalteeinrichtung 30c wiederum eine Verformung des verformbaren Bauglieds 28c in zugewandte Ausnehmungen des Dosierkopfsubstrats 10a bewirkt werden. Es ist klar, daß es beim Vorsehen einer solchen Klemmvorrichtung 46 ferner möglich ist, auf die getrennte Gegenhalteeinrichtung 30c zu verzichten, so daß der zwischen verformbaren Bauglied 28c und Aktor 34 angeordnete Abschnitt der Klemmvorrichtung direkt auf das verformbare Bauglied 28c wirken würde. In der Klemmvorrichtung sind vorzugsweise Öffnungen 47 vorgesehen, die einen Zugriff auf die Reservoire 24a und somit auch eine Befüllung derselben erlauben. Mit Ausnahme der Klemmvorrichtung 46 zur Fixierung von verformbarem Bauglied und Gegenhalteplatte entspricht das in Fig. 7 gezeigte Ausführungsbeispiel dem in Fig. 4 gezeigten, wobei jedoch anzumerken ist, daß entsprechende Klemmvorrichtungen auch für die übrigen hierin beschriebenen Ausführungsbeispiele vorgesehen sein können.

An dieser Stelle sei angemerkt, daß bei den erfindungsgemäßen Dosiervorrichtungen sämtliche Lagen des Dosierkopfes, das verformbare Material, die Gegenhalteplatte sowie das Dosierkopfsubstrat allein über eine Klemmvorrichtung miteinander verbunden sein können, so daß der Druckkopf nach Gebrauch vollständig in seine Einzelteile zerlegt und gereinigt werden kann.

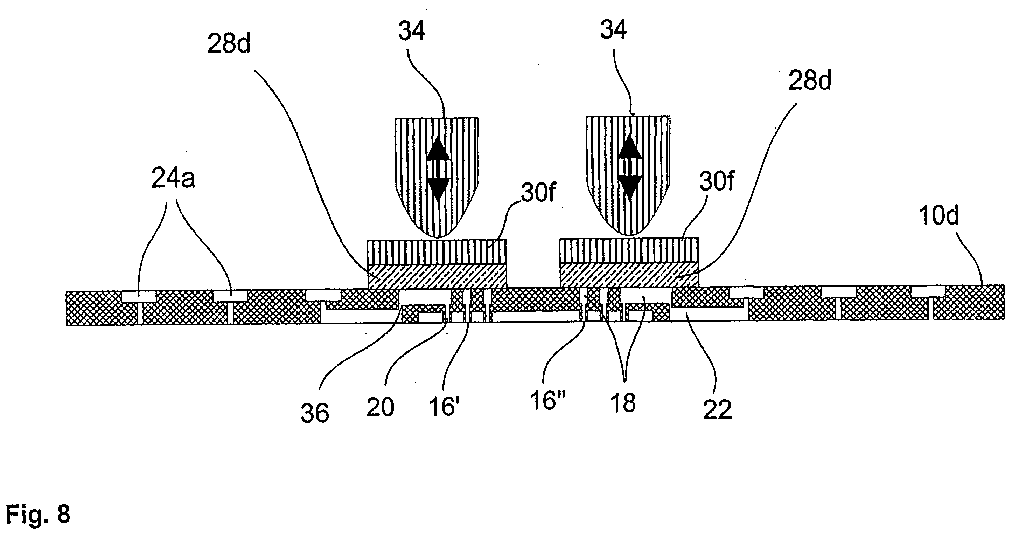

In Fig. 8 ist ein Ausführungsbeispiel einer erfindungsgemäßen Dosiervorrichtung gezeigt, bei dem die Mehrzahl von Düsenöffnungen in einzelne Untermengen untergliedert ist. Bei dem gezeigten Beispiel ist dabei beispielsweise zwei Untermengen 16' und 16" von Düsen vorgesehen, die jeweils über ein verformbares Bauglied 28d, eine Gegenhalteplatte 30f und einen Aktor 34 separat ansteuerbar sind. Entsprechend ist das Dosierkopfsubstrat 10d strukturiert, um die Untermengen von Düsen festzulegen. Es ist klar, daß eine theoretisch beliebige Anzahl von Untermengen vorgesehen sein kann, solange jede Untermenge 16', 16" noch eine Mehrzahl von Düsen aufweist.

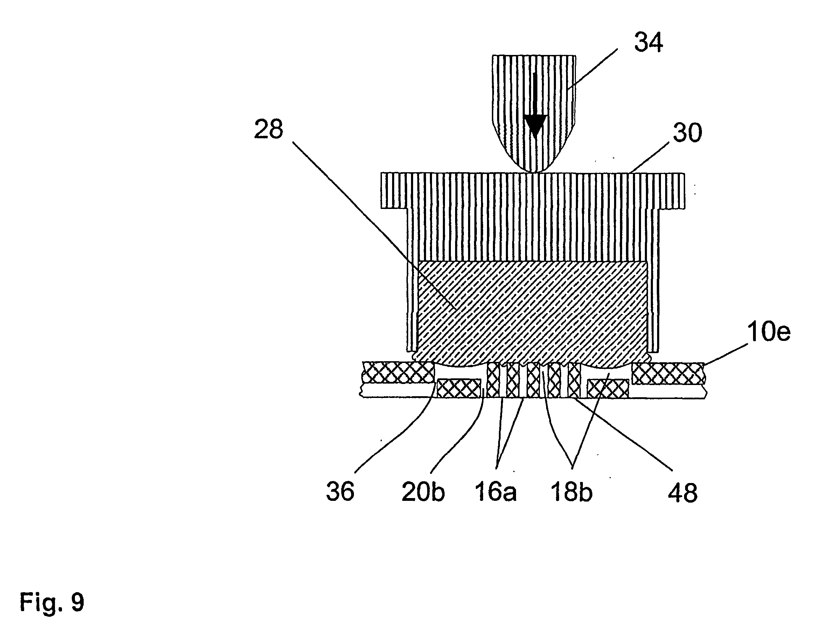

Fig. 9 zeigt eine Ausführungsform, bei der der Medienbereich oberhalb der Düsenöffnungen 16a keine unterschiedlichen Querschnitte aufweist, sondern lediglich durch die Düsenkanäle 20b und die Medienzuführungsleitungen 18b definiert ist. Ferner weist die Unterseite des Dosierkopfsubstrats 10e, in der die Düsenöffnungen 16a gebildet sind, bei dieser Ausführungsform keine Strukturierung der Düsenränder auf. Die Düsenöffnungen liegen somit in einer planen Ebene. In diesem Fall kann beispielsweise durch eine hydrophobe Beschichtung 48 der Unterseite bzw. der Düsenumrandung ein ähnlich positiver Effekt bezogen auf den Abriß der Flüssigkeitströpfchen erwirkt werden.

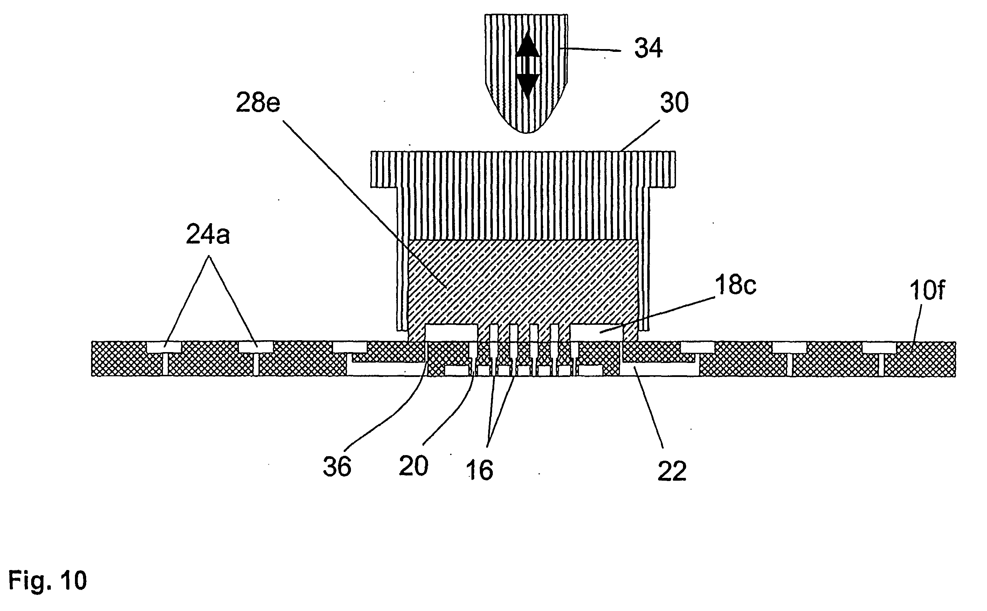

Bei dem in Fig. 10 gezeigten Ausführungsbeispiel sind Teile 18c, nämlich Teile der Medienzuführungsleitungen, der den jeweiligen Düsen bzw. Düsenöffnungen 16 zugeordneten Medienbereiche in dem verformbaren Bauglied 28e und nicht in dem Dosierkopfsubstrat 10f gebildet.

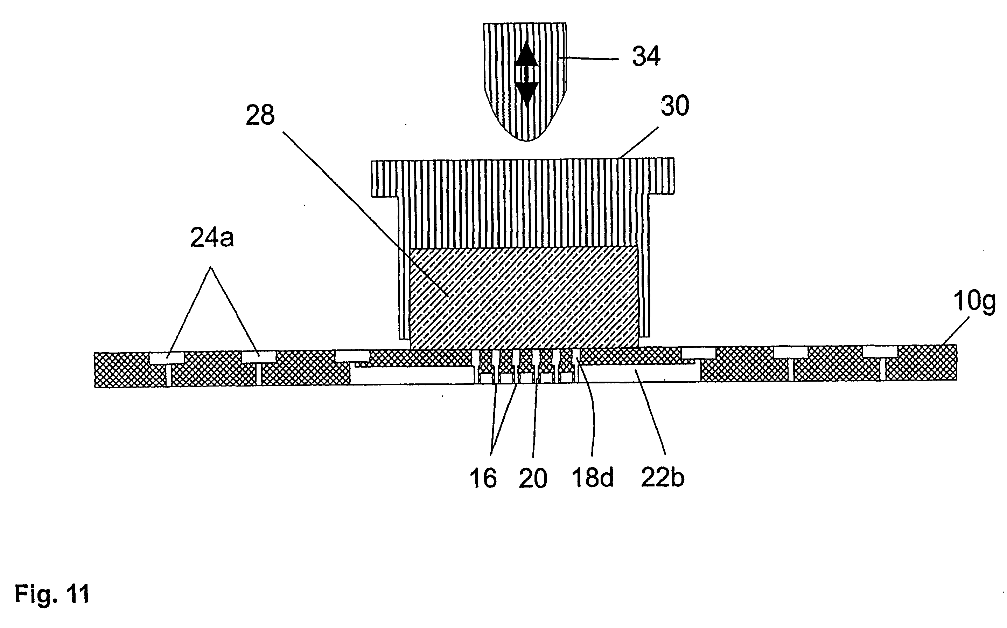

Fig. 11 zeigt eine weitere Variation, bei der die Düsen über Medienleitungen 22b in der Unterseite des Dosierkopfsubstrats 10g kontaktiert werden. Da es in diesem Fall oberhalb der Düse bzw. der Düsenöffnung 16 eine tote Kammer 18e gibt, welche schwer befüllbar ist, ist es günstig, wenn der Druckkopf zuerst befüllt wird und der Verdränger 28 erst im Anschluß daran aufgesetzt wird. In diesem Fall ist es wiederum günstig, wenn das verformbare Material hydrophob ist, damit beim Aufsetzen des Verdrängers die Flüssigkeit in die Düse zurückgedrückt wird und eine Querkontamination aufgrund der Benetzung des verformbaren Materials infolge der Kapillarkräfte beim Aufsetzen des Verdrängers 28 vermieden wird.

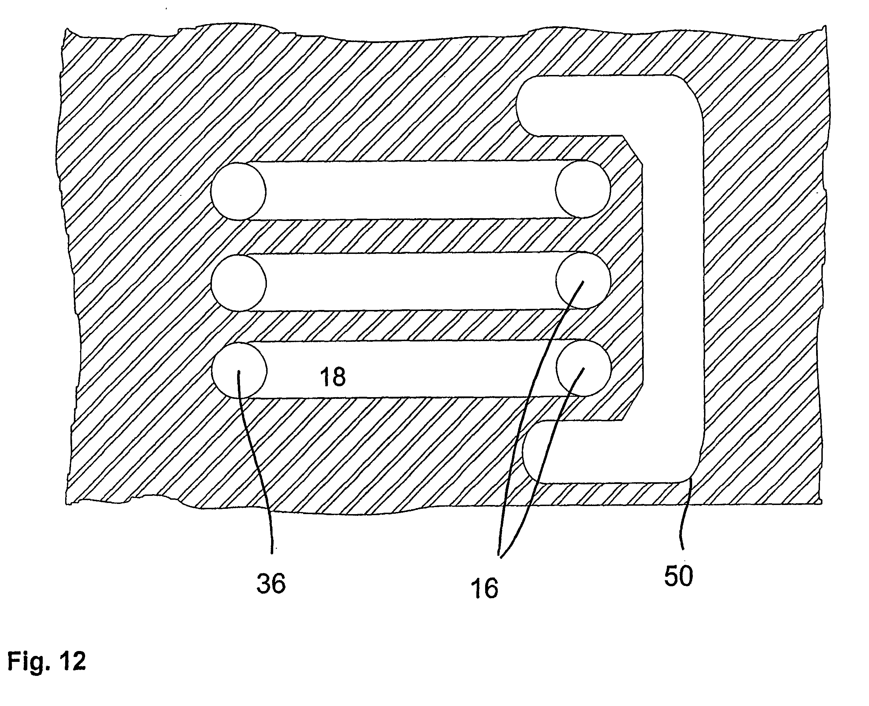

Um eine gleichmäßige Volumenverdrängung durch die Verdrängungsvorrichtung, d.h. das verformbare Bauglied, in den Düsen bzw. den in dem verformbaren Bauglied zugewandten Abschnitt derselben erzeugen zu können, können Dummy-Kanäle bzw. Kompensationskanäle verwendet werden. Ein solcher Kompensationskanal 50 ist beispielhaft in der schematischen Draufsicht in Fig. 12 gezeigt, die ferner beispielhaft Düsenöffnungen 16, Versorgungsleitungen 20 und Durchführungen 36 mit hohem Strömungswiderstand zeigt.

Die Kompensationskanäle 50 sind nicht mit Flüssigkeit befüllt und sorgen dafür, daß sich das verformbaren Material in dieselben ausbreiten kann, während ein Mikrotröpfchenausstoß bewirkt wird, d.h. bei Betätigung des Dosierkopfs. Dadurch kann die Gleichmäßigkeit des Verformungszustandes gesteigert werden und es werden inhomogene Spannungen in dem verformbaren Material vermieden.

Wie oben dargelegt wurde, besitzt bei den beschriebenen Ausführungsbeispielen das verformbare Bauglied neben der Verdrängungswirkung gleichzeitig eine Dichtwirkung und trennt die verschiedenen Medien in den verschiedenen Düsen hermetisch voneinander. Dies reduziert die Gefahr einer Querkontamination zwischen verschiedenen Düsen. Die Materialparameter, z.B. die Materialstärke und die Kompressibilität des verformbaren Materials, können beispielsweise derart gewählt werden, daß der Druck, der sich in den Düsen aufgrund der Beschleunigung der Flüssigkeiten oder aufgrund der Reibung der Flüssigkeiten an den Düsenwänden aufbaut, keine Rückwirkung auf den Verformungszustand des verformbaren Mediums in den Düsen besitzt. Darüber hinaus wird vorzugsweise ein Material für das verformbare Bauglied verwendet, das eine geringe Kompressibilität besitzt, die deutlich geringer als die vergleichbare Kompressibilität von Luft ist. Noch bevorzugter wird ein inkompressibles verformbares Material verwendet, beispielsweise ein Elastomer, wie z.B. Gummi oder Silikon. Wird ein solches Material auf der Rückseite durch eine Aktorbewegung deformiert, so wird es seine Form an anderer Stelle ändern, so daß insgesamt das Volumen konstant bleibt. Dies führt dann dazu, daß das Elastomer an dem den Düsenöffnungen entgegengesetzten Enden der Düsen in die Düsen hinein ausgelenkt wird. Damit wird die Flüssigkeit direkt aus den Düsen verdrängt und es werden Mikrotröpfchen abgeschossen.

Neben den beschriebenen Ausführungsbeispielen, bei denen das verformbare Bauglied direkt an das Dosierkopfsubstrat angrenzt ist es möglich, ein weiteres passives Material zwischen dem verformbaren Bauglied und dem Dosierkopfsubstrat anzuordnen, beispielsweise eine luftdurchlässige aber für Flüssigkeiten undurchlässige Folie. Dies könnte beispielsweise beim Befüllen des Systems mit Flüssigkeit von Vorteil sein, da Luft an der zu den Düsenöffnungen entgegensetzten Seite der Düsen entweichen kann. Dies ermöglicht, daß die Volumenverdrängungseinrichtung erst im Anschluß an den Befüllungsvorgang aufgesetzt werden kann und trotzdem keine Querkontamination von Flüssigkeiten auftritt.

Das verformbare Bauglied besteht erfindungsgemäß vorzugsweise aus einem massiven Feststoffkörper aus einem Material, das verformbar ist und vorzugsweise eine geringe oder keine Kompressibilität besitzt. Alternativ zu den oben beschriebenen Ausführungsbeispielen könnte das verformbare Bauglied auch durch einen mit Flüssigkeit gefüllten Beutel implementiert sein.

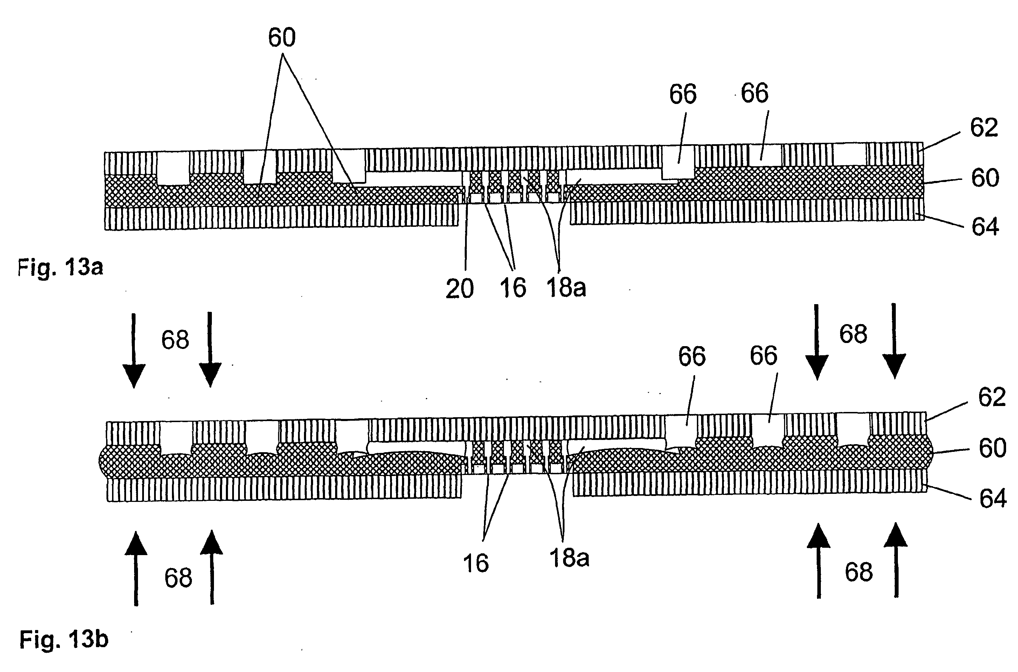

Die Fig. 13a und 13b schießlich zeigen ein Beispiel einer anderen Vorrichtung zum Ausstoßen einer Mehrzahl von Mikrotröpfchen, bei der das Dosierkopfsubstrat selbst aus einem verformbaren Material, beispielsweise einem Elastomer besteht. Fig. 13a zeigt die Vorrichtung im Ruhezustand, während Fig. 13b die Vorrichtung im betätigten Zustand zeigt.

Wie in Fig. 13a gezeigt ist, kann ein solches Dosierkopfsubstrat 60 aus einem verformbaren Material, beispielsweise einem Elastomer, wie z.B. Gummi oder Silikon, eine Form aufweisen, die identisch zu der des Dosierkopfsubstrats 10c des in Fig. 6 gezeigten Ausführungsbeispiels ist. In gleicher Weise könnte das aus einem verformbaren Material bestehende Dosierkopfsubstrat auch eine Form aufweisen, die der Form des Dosierkopfsubstrats von einem der anderen Ausführungsbeispiele entspricht.

Wie in Fig. 13a gezeigt ist, ist das Dosierkopfsubstrat 60 zwischen zwei starren Deckplatten 62 und 64 angeordnet, wobei die untere Deckplatte 64 strukturiert ist, um den Bereich des Arrays aus Düsenöffnungen 16 freizulassen, während die obere Deckplatte 62 strukturiert ist, um vergrößerte Reservoirbereiche 66 zu definieren. Werden nun die starren Deckplatten 62 und 64 zusammengedrückt, wird das Dosierkopfsubstrat gequetscht, wodurch sich die Querschnitte und somit das Volumen der Düsen bzw. Düsenkanäle 20 und der Bereiche 18a, d.h. der den Düsen zugeordneten Medienbereiche verringern, wie in Fig. 13b gezeigt ist. Somit wird Flüssigkeit nach außen verdrängt. Bei der beschriebenen Kompression des Dosierkopfsubstrats 60 handelt es sich um eine axiale Kompression, d.h. eine Kompression in Richtung der Achsen der Düsen des Dosierkopfsubstrats.

Auch hier ist für das Ausstoßen von Flüssigkeitströpfchen entscheidend, daß durch Betätigung des Aktors die Volumina der an die Düse angeschlossenen flüssigkeitsführenden Leitungen bzw. Medienbereiche verringert werden. Besteht das Dosierkopfsubstrat selbst aus einem verformbaren Material und erfolgt eine Betätigung wie oben beschrieben, wird sich das verformbare Material in alle Richtungen verformen, die nicht durch die starren Platten ausgeschlossen sind. Das verformbare Dosierkopfsubstrat wird also z.B. aus den Randbereichen des Dosierkopfs herausquellen, wobei sich aber auch die Querschnitte der flüssigkeitsführenden Kanäle zwischen Reservoir und Düse verringern, wie es in Fig. 13b schematisch dargestellt ist.

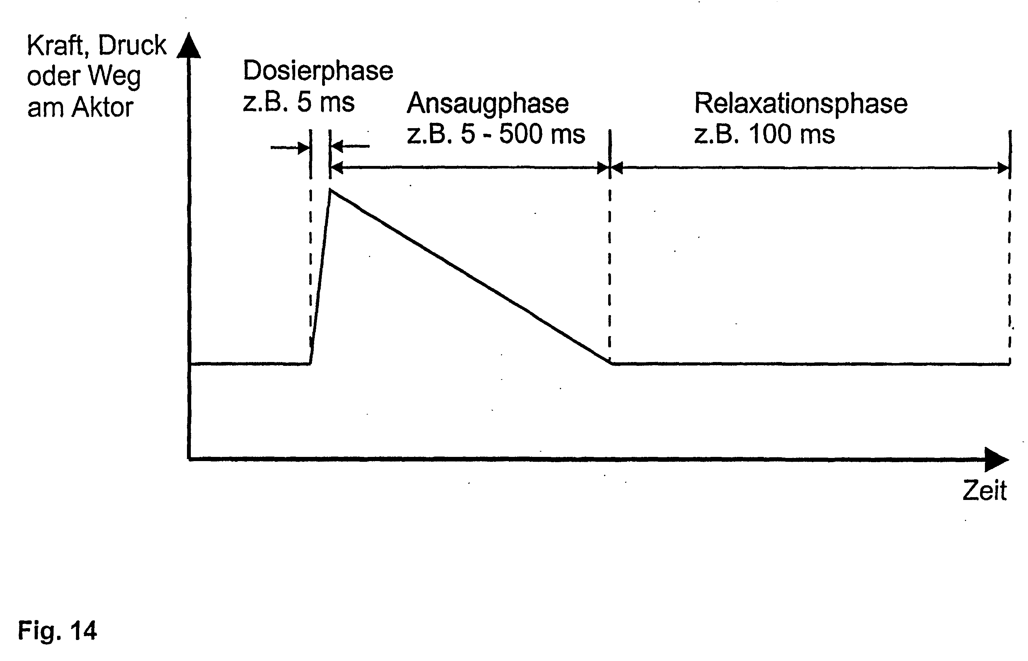

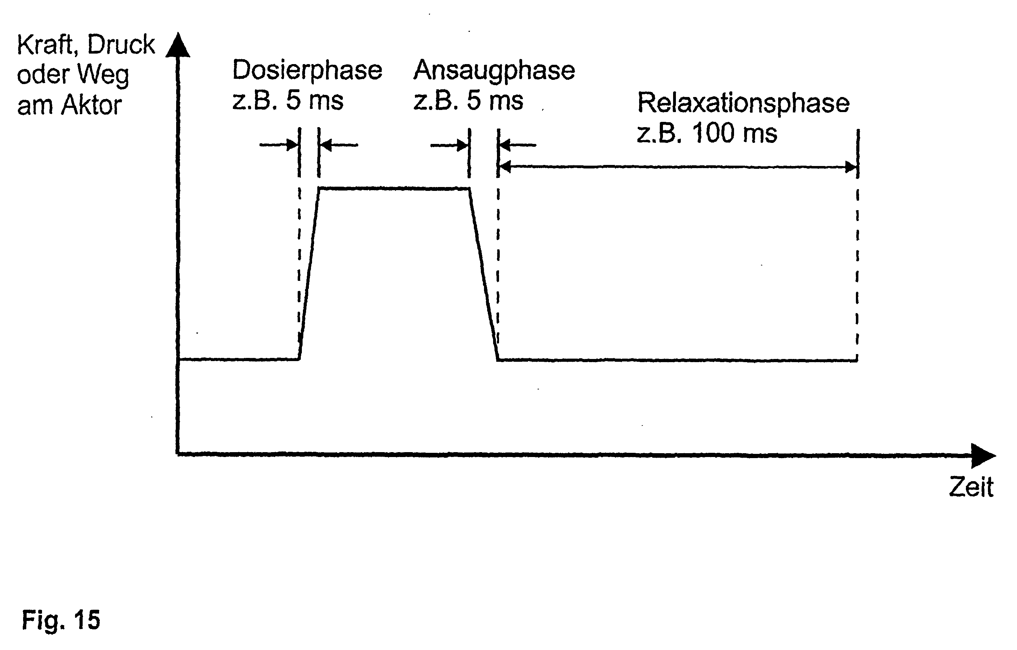

Bei den erfindungsgemäßen Vorrichtungen zum Ausstoßen einer Mehrzahl von Mikrotröpfchen können die Kapillarkräfte in den Kanälen, die Oberflächenspannungen der Flüssigkeiten an den Düsen sowie die Strömungswiderstände in den gesamten Medienleitungen zwischen Düsen und Reservoiren beispielsweise so aufeinander abgestimmt werden, daß die Zeitkonstante für die Relaxation der Flüssigkeitssäule an den Düsenöffnungen z.B. im Bereich von 100ms liegt. Wird die Aktorbewegung innerhalb von beispielsweise 5ms vollzogen, so ist dies zu schnell als daß der durch das verformbare Bauteil generierte Volumenstrom verbunden mit der Relaxation kompensiert werden könnte. Vor dem erneuten, definierten Ausstoß von Flüssigkeit muß der Aktor zunächst in die Ausgangsposition zurückgefahren werden (Ansaugphase) und die Ralaxationszeit abgewartet werden. Zwei geeignete zeitliche Abläufe sind in den Fig. 14 und 15 schematisch dargestellt.

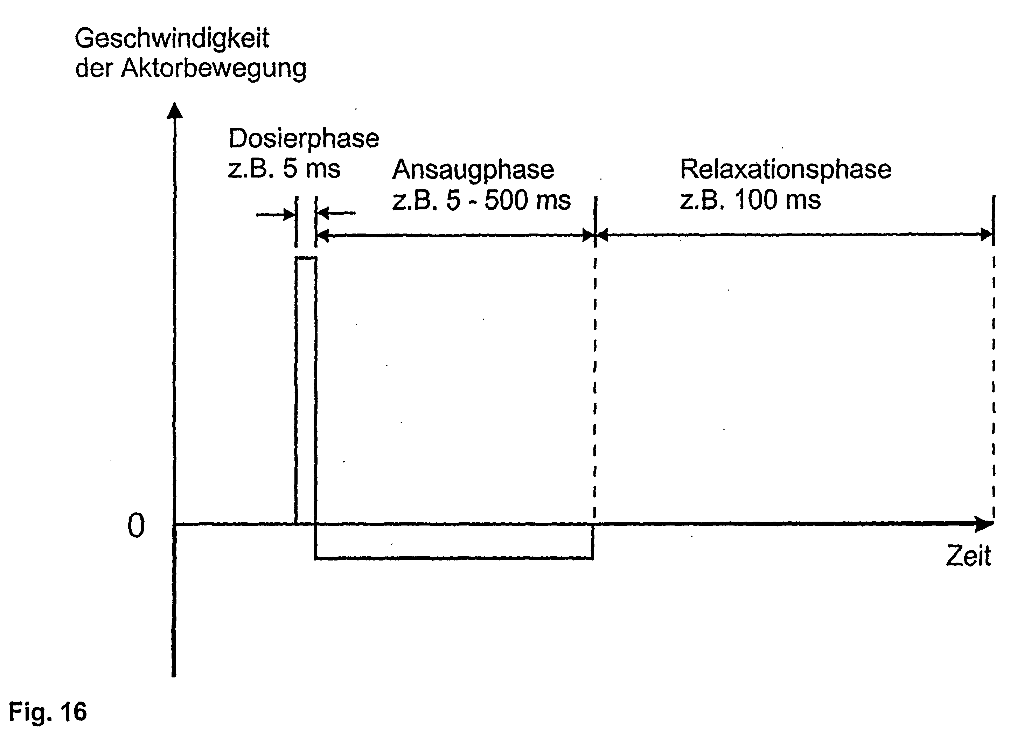

Alternativ kann die jeweilige Fassung bzw. das jeweilige Gegenhalteelement mit einem definierten Geschwindigkeitsprofil angesteuert werden, wie in Fig. 16 schematisch dargestellt ist. Dadurch kann die Flüssigkeit im Bereich der Düse gezielt auf eine mittlere Geschwindigkeit größer als 1 - 2 m/s beschleunigt werden, ein Wert, der erfahrungsgemäß für den Abriß von Flüssigkeitströpfchen an den Düsen erforderlich ist.

Zur Befüllung der erfindungsgemäßen Dosierkopfvorrichtungen sind unterschiedliche Varianten denkbar, wobei die Befüllung vor oder nach dem Aufsetzen des Verdrängers bzw. des verformbaren Bauglieds erfolgen kann.

Erfolgt die Befüllung vor dem Aufsetzen des Verdrängers, so entsteht beim Aufsetzen des Verdrängers zwischen den Medienbereichen auf der Düsenrückseite und dem verformbaren Bauteil ein immer kleiner werdender Spalt. Das verformbare Bauteil sowie die Bereiche, die Versorgungskanäle in der zugewandten Oberfläche des Dosierkopfsubstrats umgeben, sollten deshalb aus einem hydrophoben Material bestehen bzw. mit einem solchen beschichtet sein. Andernfalls würde die Flüssigkeit in den beim Aufsetzen immer kleiner werdenden kapillaren Spalt hineingezogen werden, wodurch sich ein Risiko einer Querkontamination verschiedener Flüssigkeiten aus unterschiedlichen Kanälen ergibt. Alternativ kann, wie oben beschrieben, eine luftdurchlässige, aber flüssigkeitsabweisende Folie verwendet werden. Dennoch kann ein Restrisiko bezüglich einer Querkontamination bestehen bleiben.

Erfolgt die Befüllung nach dem Aufsetzen des Verdrängers, so ist zwar die Querkontamination zwischen den verschiedenen Kanälen definitiv ausgeschlossen, die Befüllung gestaltet sich aber nun wesentliche schwieriger. Die meisten verformbaren, gummiartigen Materialien sind von Natur aus hydrophob, also wasserabweisend. Dies führt dazu, daß die durch den Verdränger gebildete Wand der Medienbereiche, d.h. sozusagen die "Kanaldecke", von der Flüssigkeit schlechter benetzt wird als die übrigen Wände, z.B. der Kanalboden. Dies kann beim Befüllen zu Lufteinschlüssen führen. Die genaue Menge des Lufteinschlusses ist jedoch oft nicht reproduzierbar. Da Lufteinschlüsse kompressibel sind, "schlucken" sie einen Teil des verdrängten Volumens. Dies kann dazu führen, daß die verschiedenen Kanäle trotz identischer Betätigung unterschiedlich große Flüssigkeitsmengen dosieren bzw. einzelne Kanäle überhaupt keine Flüssigkeit abgeben.

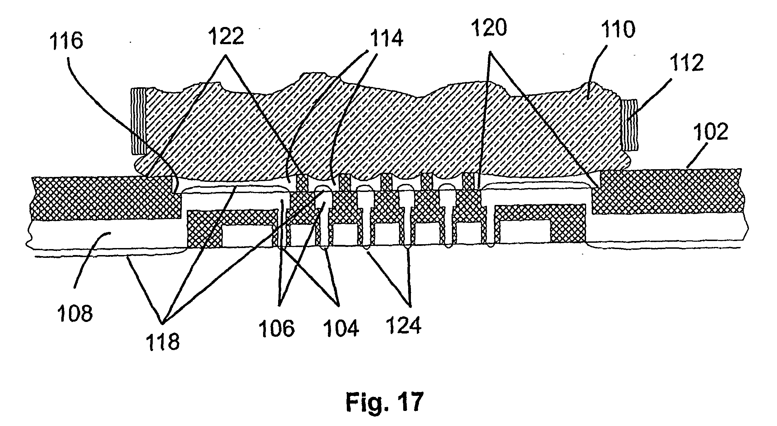

Ein weiteres Ausführungsbeispiels einer erfindungsgemäßen Vorrichtung zum Aufbringen einer Mehrzahl von Mikrotröpfchen auf ein Substrat, bei dem reproduzierbare Lufteinschlüsse bzw. Puffermedieneinschlüsse existieren, ist in Fig. 17 gezeigt. Bei diesem Ausführungsbeispiel befinden sich im Gegensatz zu den oben beschriebenen Ausführungsbeispielen zwischen dem verformbaren Bauglied und den Medienbereichen mit der zu dosierenden Flüssigkeit jeweilige Puffermedienbereiche, wie im folgenden näher erläutert wird.

Bei dem in Fig. 17 gezeigten Ausführungsbeispiel umfaßt die erfindungsgemäße Vorrichtung ein strukturiertes Dosierkopfsubstrat 102, in dessen Unterseite wiederum eine Mehrzahl von Düsenöffnungen 104 angeordnet ist. Die Düsenöffnungen stehen wiederum in fluidmäßigem Kontakt zu jeweiligen Medienbereichen 106, die oberhalb der Düsenöffnungen 104 in dem Dosierkopfsubstrat 102 gebildet sind. Wie bei den anderen Ausführungsbeispielen sind die Medienbereiche 106 wiederum über eine oder mehrere Versorgungsleitungen, von denen eine veranschaulichend mit dem Bezugszeichen 108 bezeichnet ist, mit Medienreservoiren verbunden.

Ferner ist ein verformbares Bauglied 110 mit einer Fassung 112 vorgesehen, wie sie beispielsweise oben bezugnehmend auf Fig. 1 beschrieben wurden. Im Gegensatz zu den bisher beschriebenen Ausführungsbeispielen grenzt jedoch das verformbare Bauglied 110 nicht direkt an das zu dosierende Medium, d.h. den Medienbereich desselben, an, sondern wirkt über ein Puffermedium auf das zu dosierende Medium ein. Dabei ist jedem Medienbereich 106 ein separater Puffermedienbereich 114 zugeordnet. Der zusätzliche Puffermedienbereich ist in dem in Fig. 17 gezeigten Ausführungsbeispiel durch zusätzliche Abstufungen 116 in dem Dosierkopfsubstrat realisiert, durch die erreicht wird, daß das verformbare Bauglied nicht in direkten Kontakt mit dem zu dosierenden Medium kommt. Somit liegt bei dem in Fig. 17 gezeigten Ausführungsbeispiel ein Puffermedieneinschluß, beispielsweise Luft, vor, wobei das Volumen des Puffermedieneinschlusses reproduzierbar ist, da es durch die Geometrie der Absenkung definiert ist.

Um zu verdeutlichen, daß das verformbare Bauglied 110 nicht in Berührung mit dem zu dosierenden Medium kommt, sind die sich ausbildenden Menisken der zu dosierenden Flüssigkeit in Fig. 17 schematisch dargestellt und teilweise mit dem Bezugszeichen 118 bezeichnet. An dieser Stelle angemerkt, daß bei dem in Fig. 17 gezeigten Ausführungsbeispiel der erfindungsgemäßen Dosiervorrichtung die mit den Bezugszeichen 120 und 122 bezeichneten Oberflächen vorzugsweise hydrophob sind, so daß die dargestellte Meniskenbildung unterstützt wird. Bei diesen hydrophoben Oberflächen 120 handelt es sich um die dem verformbaren Bauglied 110 zugewandten Oberflächen der Abstufungen 116. Optional kann zusätzlich auch die dem verformbaren Bauglied zugewandte oberste Oberfläche des Dosierkopfsubstrats 102 hydrophob ausgebildet sein, wie durch das Bezugszeichen 122 angezeigt ist. Dagegen sind die übrigen Oberflächen in den Düsen und Medienbereichen hydrophil, so daß die Flüssigkeitsmenisken jeweils aus den Düsen bzw. Medienbereichen bzw. Zuführungsleitungen herausragen. Es ist klar, daß vorzugsweise die untere Oberfläche des Dosierkopfsubstrats mit Ausnahme der in derselben gebildeten Versorgungsleitungen und Düsenöffnungen hydrophob ausgebildet sein kann, so daß auch hier die gezeigte Meniskenbildung an den Versorgungsleitungen bzw. den Düsenöffnungen, wie durch das Bezugszeichen 124 angezeigt ist, unterstützt wird.

Bei dem in Fig. 17 gezeigten Ausführungsbeispiel erlaubt die Absenkung in den Medienbereichen weiter, den Verdränger wahlweise vor oder nach der Befüllung aufzusetzen. In beiden Fällen ist die Menge des Puffermediumeinschlusses, bzw. Lufteinschlusses, in gleicher Weise durch die Geometrie der Absenkung der Medienbereiche definiert und somit reproduzierbar. Der Puffermedieneinschluß als solcher wirkt wie eine fluidische Kapazität, deren Größe sich durch das Volumen des Puffermedieneinschlusses beeinflussen läßt. Somit läßt sich auch die Dynamik, mit der die Flüssigkeit ausgestossen wird, beeinflussen.

Es sei darauf hingewiesen, daß die zu jeder Düse gehörenden Puffermedien nahezu beliebige Medien sein können, sofern sich diese nicht mit der zu dosierenden Flüssigkeit vermischen. In Frage kommen beispielsweise neben der beschriebenen Luft sonstige Gase, Öle und dergleichen.

Es ist für Fachleute klar, daß in den jeweiligen Dosierkopfsubstraten neben den dargestellten und beschriebenen Strukturierungen weitere Funktionselemente gebildet sein können, beispielsweise Reaktionskammern, Mischer, Strömungswiderstände, Pumpen und dergleichen. Daneben können auch elektrische Leiterbahnen oder elektrische Funktionselemente integriert werden.

Bei den erfindungsgemäßen Vorrichtungen können die Düsen identische oder unterschiedliche Abmessungen haben. Dabei umfassen die erfindungsgemäßen Vorrichtungen auch solche, bei denen sich aus jeder oder einzelnen Düsen, beispielsweise reproduzierbar, zwei oder mehrere Mikrotröpfchen pro Dosiervorgang lösen.

Das Dosierkopfsubstrat kann ferner eine Formatumwandlung zwischen einem ersten Muster von Reservoiröffnungen und einem zweiten Muster von Düsenöffnungen liefern. Eine solche automatische Umwandlung wird durch die jeweilige Anordnung der Reservoire und der Düsenöffnungen, sowie die zwischen denselben verlaufenden Versorgungskanäle geliefert. Somit ist es möglich, die Fluidreservoire in einem Rastermaß von gebräuchlichen Mikrotiterplatten, die beispielsweise 96, 384 oder 1536 Kammern aufweisen, anzuordnen und unter Verwendung von Fluidkanälen durch das Dosierkopfsubstrat in ein Raster von Mikrodüsen zu überführen, in dem Analyte auf Mikroarrays bzw. Biochips aufgebracht werden sollen. Somit können die Fluidreservoire mit konventionellen Labor-Pipettierautomaten automatisch parallel befüllt werden.

Die vorliegende Erfindung weist eine Vielzahl möglicher Anwendungen auf, beispielsweise, wie bereits oben ausgeführt wurde, die Herstellung von sogenannten Mikroarrays bzw. Biochips für bioanalytische Anwendungen. Daneben ist die vorliegende Erfindung zur Dosierung von Reagenzien in sogenannte Mikrotiterplatten, beispielsweise zum hochparallelen Screening von neuen Wirkstoffen in der Medikamentenentwicklung einsetzbar. Insbesondere vorteilhaft ist dabei die bereits oben angesprochene Reformatierung von Mikrotiterplatten mit einem größeren Rasterformat in eine höher integrierte Mikrotiterplatte. Schließlich kann die vorliegende Erfindung angewendet werden, um Löt- oder Klebepunkte beispielsweise auf elektronische Leiterplatten oder Platinen aufzubringen.

## Patentansprüche

1. Vorrichtung zum Aufbringen einer Mehrzahl von Mikrotröpfchen auf ein Substrat, mit folgenden Merkmalen:
einem Dosierkopfsubstrat (10; 10a bis 10g), in dem eine Mehrzahl von Düsenöffnungen (16; 16a) gebildet ist;
einem mit einer zu dosierenden Flüssigkeit zu befüllenden Medienbereich (18; 18a bis 18d; 20; 20a; 20b) für jede Düsenöffnung (16; 16a);
einem verformbaren Bauglied (28; 28a bis 28e), das an die Mehrzahl von Medienbereichen angrenzt und auf die Medienbereiche voneinander trennenden Trennwänden aufliegt; und
einer Betätigungseinrichtung (34) zum Betätigen des verformbaren Bauglieds (28; 28a bis 28e), so daß sich das verformbare Bauglied in die Medienbereiche verformt, so daß durch eine aufgrund der Verformung in die Medienbereiche bewirkte Flüssigkeitsverdrängung gleichzeitig Mikrotröpfchen aus der Mehrzahl von Düsenöffnungen (16; 16a) getrieben werden.

2. Vorrichtung nach Anspruch 1, bei der die Verformung des verformbaren Bauglieds (28; 28a bis 28e) durch eine Relativbewegung zwischen einem Gegenhalteelement (30; 30a bis 30f) und dem Dosierkopfsubstrat (10; 10a bis 10g), zwischen denen das verformbare Bauglied angeordnet ist, bewirkt wird.

3. Vorrichtung nach Anspruch 1 oder 2, bei der das Gegenhalteelement (30) eine starre Fassung für das verformbare Bauglied (28) ist, wobei die starre Fassung, das verformbare Bauglied (28) und das Dosierkopfsubstrat (10; 10a; 10e; 10f) derart angeordnet sind, daß die starre Fassung und das Dosierkopfsubstrat das verformbare Bauglied mit Ausnahme der Bereiche, in denen dasselbe an die Medienbereiche angrenzt, größtenteils umgeben.

4. Vorrichtung nach Anspruch 1 oder 2, bei der das verformbare Bauglied (28a; 28b; 28c; 28d) und das Gegenhalteelement (30a; 30b; 30c; 30d; 30e; 30f) plattenförmig ausgebildet sind.

5. Vorrichtung nach einem der Ansprüche 1 bis 4, bei der das verformbare Bauglied (28; 28a bis 28e) aus einem im wesentlichen inkompressiblen Material besteht.

6. Vorrichtung nach einem der Ansprüche 1 bis 5, bei der das verformbare Bauglied (28; 28a bis 28e) aus einem massiven Körper besteht.

7. Vorrichtung nach einem der Ansprüche 1 bis 6, bei der das verformbare Bauglied aus einem Elastomer besteht.

8. Vorrichtung nach einem der Ansprüche 1 bis 7, bei der Öffnungen (38) der Medienbereiche (18), an die das verformbare Bauglied (28) angrenzt, im wesentlichen identische Querschnittprofile aufweisen.

9. Vorrichtung nach einem der Ansprüche 1 bis 8, bei der Öffnungen (38) der Medienbereiche (18), an die das verformbare Bauglied (28) angrenzt, eine größere Querschnittfläche besitzen als die Düsenöffnungen (16).

10. Vorrichtung nach einem der Ansprüche 1 bis 9, bei der das verformbare Bauglied (28; 28a bis 28e) derart an die Medienbereiche (18; 18a bis 18d) angrenzt, daß Öffnungen (38) der Medienbereiche gegeneinander abgedichtet sind.

11. Vorrichtung nach einem der Ansprüche 1 bis 9, bei der zwischen dem verformbaren Bauglied (28; 28a bis 28e) und dem Dosierkopfsubstrat (10; 10a bis 10g) eine luftdurchlässige, für Flüssigkeiten undurchlässige flexible Schicht angeordnet ist.

12. Vorrichtung nach einem der Ansprüche 1 bis 11, bei der in dem Dosierkopfsubstrat nicht mit Flüssigkeit zu befüllende ausgenommene Bereiche (50) vorgesehen sind, an die das verformbare Bauglied angrenzt.

13. Vorrichtung nach einem der Ansprüche 1 bis 12, bei der Versorgungsleitungen (22; 22a; 22b; 18a) zum Zuführen von Flüssigkeiten in die Medienbereiche vorgesehen sind, wobei die Versorgungsleitungen derart ausgestaltet sind, daß die Flüssigkeiten durch eine Kapillarwirkung in denselben gehalten werden.

14. Vorrichtung nach einem der Ansprüche 1 bis 13, bei der Versorgungsleitungen (22; 22a; 22b; 18a) gebildet sind, die die Medienbereiche jeweils mit einem Speisungsbereich (24; 24a bis 24c; 66) verbinden, wobei die Düsenöffnungen (16; 16a) in einem ersten Muster auf einer ersten Oberfläche des Dosierkopfsubstrats angeordnet sind und die Speisungsbereiche in einem zweiten Muster in einer zweiten, der ersten Oberfläche gegenüberliegenden Oberfläche des Dosierkopfsubstrats angeordnet sind.

15. Vorrichtung zum Aufbringen einer Mehrzahl von Mikrotröpfchen auf ein Substrat nach Anspruch 1, bei der
jeder Medienbereich einen separaten Puffermedienbereich (114) aufweist;
das verformbare Bauglied (110) an die Puffermedienbereiche angrenzt; und
die Betätigungseinrichtung das verformbare Bauglied (110) betätigt, so daß sich das verformbare Bauglied in die Puffermedienbereiche verformt.

16. Verfahren zum Aufbringen einer Mehrzahl von Mikrotröpfchen auf ein Substrat, mit folgenden Schritten:
Erzeugen jeweils eines mit Flüssigkeit befüllten Medienbereichs (18; 18a bis 18d; 20; 20a; 20b) an einer Mehrzahl von Düsenöffnungen (16; 16a);
Anordnen eines verformbaren Bauglieds (28; 28a bis 28e) angrenzend an die Mehrzahl von Medienbereichen und aufliegend auf Trennwänden, die die Medienbereiche voneinander trennen; und
Verdrängen von Flüssigkeit aus jedem der Medienbereiche durch das Erzeugen einer Verformung des verformbaren Bauglieds (28; 28a bis 28e) in die Medienbereiche, so daß durch die Flüssigkeitsverdrängung durch die Verformung des verformbaren Bauglieds ein Mikrotröpfchen aus jeder Düsenöffnung ausgestoßen wird.

17. Verfahren zum Aufbringen einer Mehrzahl von Mikrotröpfchen auf ein Substrat nach Anspruch 16, bei dem
jeder Medienbereich einen separaten Puffermedienbereich (114) aufweist, und
Flüssigkeit aus jedem der Medienbereiche verdrängt wird, indem eine Verformung des verformbaren Bauglieds (110), das an die Puffermedienbereiche angrenzt, in die Puffermedienbereiche erzeugt wird.

## Claims

1. A device for applying a plurality of microdroplets onto a substrate, comprising:
a dosing head substrate (10; 10a to 10g) having a plurality of nozzle openings (16; 16a) formed therein;
a media portion (18; 18a to 18d; 20a; 20b) for each nozzle opening (16; 16a), which is to be filled with a liquid to be dosed;
a deformable component (28; 28a to 28e) adjacent to the plurality of media portions and resting on separating walls separating the media portions from one another; and
an actuating means (34) for actuating the deformable component (28; 28a to 28e) such that the deformable component deforms into the media portions so as to simultaneously expel microdroplets from the plurality of nozzle openings (16; 16a) due to a displacement of liquid caused by the deformation into the media portions.

2. A device according to claim 1, wherein the deformation of the deformable component (28; 28a to 28e) is effected by relative movement between a counter-holding element (30; 30a to 30f) and the dosing head substrate (10; 10a to 10g) having the deformable component arranged therebetween.

3. A device according to claim 1 or 2, wherein the counter-holding element (30) is a rigid socket for the deformable component (28), wherein the rigid socket, the deformable component (28) and the dosing head substrate (10; 10a; 10e; 10f) are arranged such that the rigid socket and the dosing head substrate surround most of the deformable component, except for the portions where the same is adjacent the media portions.

4. A device according to claim 1 or 2, wherein the deformable component (28a; 28b; 28c; 28d) and the counter-holding element (30a; 30b; 30c; 30d; 30e; 30f) are of plate-shaped configuration.

5. A device according to any of claims 1 to 4, wherein the deformable component (28; 28a to 28e) consists of a substantially incompressible material.

6. A device according to any of claims 1 to 5, wherein the deformable component (28; 28a to 28e) consists of a massive body.

7. A device according to any of claims 1 to 6, wherein the deformable component consists of an elastomer.

8. A device according to any of claims 1 to 7, wherein openings (38) of the media portions (18) adjacent the deformable component (28) have substantially identical cross-sectional profiles.

9. A device according to any of claims 1 to 8, wherein the openings (38) of the media portions (18) adjacent the deformable component (28) have a larger cross-sectional area than the nozzle openings (16).

10. A device according to any of claims 1 to 9, wherein the deformable component (28; 28a to 28e) is adjacent the media portions (18; 18a to 18d) such that openings (38) of the media portions are sealed with respect to each other.

11. A device according to any of claims 1 to 9, wherein a flexible layer that is permeable to air, but impermeable to liquids is arranged between the deformable component (28; 28a to 28e) and the dosing head substrate (10; 10a to 10g).

12. A device according to any of claims 1 to 11, wherein the dosing head substrate is provided with recessed portions (50) that are not to be filled with liquid and have the deformable component arranged adjacent thereto.

13. A device according to any of claims 1 to 12, wherein supply lines (22; 22a; 22b; 18a) for supplying liquids to the media portions are provided, the supply lines being designed such that the liquids are retained in the same by a capillary effect.

14. A device according to any of claims 1 to 13, wherein supply lines (22; 22a; 22b; 18a) are formed, each connecting the media portions to a feed portion (24; 24a to 24c; 66), wherein the nozzle openings (16; 16a) are arranged in a first pattern on a first surface of the dosing head substrate and the feed portions are arranged in a second pattern on a second surface of the dosing head substrate located opposite the first surface thereof.

15. A device for applying a plurality of microdroplets onto a substrate, according to claim 1, wherein
each media portion has a separate buffer media portion (114);
the deformable component (110) is adjacent to the buffer media portions; and
the actuating means actuate the deformable component (110) such that the deformable component deforms into the buffer media portions.

16. A method of applying a plurality of microdroplets onto a substrate, comprising the steps of:
creating one liquid-filled media portion (18; 18a to 18d; 20; 20a; 20b) each on a plurality of nozzle openings (16; 16a);
disposing a deformable component (28; 28a to 28e) adjacent to the plurality of media portions and resting on separating walls separating the media portions from one another; and
displacing liquid from each of the media portions by producing a deformation of the deformable component (28; 28a to 28e) into the media portions so that a microdroplet is ejected from each nozzle opening due to the deformation of the deformable component.

17. A method of applying a plurality of microdroplets onto a substrate, according to claim 16, wherein
each media portion has a separate buffer media portion (114), and
liquid is displaced from each of the media portions by producing a deformation of the deformable component (110), which is adjacent to the buffer media portions, into the buffer media portions.

## Revendications

1. Dispositif pour déposer une pluralité de microgouttelettes sur un substrat, aux caractéristiques suivantes :
un substrat de tête doseuse (10; 10a à 10g) dans lequel sont formées une pluralité d'ouvertures de tuyère (16; 16a) ;
une zone à fluide à remplir d'un fluide à doser (18; 18a à 18d; 20; 20a; 20b) pour chaque ouverture de tuyère (16; 16a) ;
un élément déformable (28; 28a bis 28e) adjacent à la pluralité de zones à fluide et reposant sur les cloisons séparant les zones à fluide l'une de l'autre; et
un dispositif d'actionnement (34) destiné à actionner l'élément déformable (28; 28a à 28e), de sorte que l'élément déformable se déforme, pour former les zones à fluide, de sorte que, par un refoulement de liquide provoqué par suite de la déformation pour former les zones à fluide, des microgouttelettes soient simultanément expulsées de la pluralité d'ouvertures de tuyère (16; 16a).

2. Dispositif selon la revendication 1, dans lequel la déformation de l'élément déformable (28; 28a à 28e) est provoquée par un déplacement réciproque entre un élément antagoniste (30; 30a à 30f) et le substrat de tête doseuse (10; 10a à 10g) entre lesquels est disposé l'élément déformable.

3. Dispositif selon la revendication 1 ou 2, dans lequel l'élément antagoniste (30) est une douille rigide pour l'élément déformable (28), la douille rigide, l'élément déformable (28) et le substrat de tête doseuse (10; 10a; 10e; 10f) étant disposés de sorte que la douille rigide et le substrat de tête doseuse entourent pour la plus grande partie l'élément déformable, à l'exception des zones dans lesquelles ce dernier est adjacent aux zones à fluide.

4. Dispositif selon la revendication 1 ou 2, dans lequel l'élément déformable (28a; 28b; 28c; 28d) et l'élément antagoniste (30a; 30b; 30c; 30d; 30e; 30f) sont réalisés en forme de plaque.

5. Dispositif selon l'une des revendications 1 à 4, dans lequel l'élément déformable (28; 28a à 28e) est réalisé en un matériau sensiblement non compressible.

6. Dispositif selon l'une des revendications 1 à 5, dans lequel l'élément déformable (28; 28a à 28e) consiste en un corps massif.

7. Dispositif selon l'une des revendications 1 à 6, dans lequel l'élément déformable est réalisé en élastomère.

8. Dispositif selon l'une des revendications 1 à 7, dans lequel les ouvertures (38) des zones à fluide (18) auxquelles est adjacent l'élément déformable (28) présentent substantiellement des sections identiques.

9. Dispositif selon l'une des revendications 1 à 8, dans lequel les ouvertures (38) des zones à fluide (18) auxquelles est adjacent l'élément déformable (28) présentent une surface de section plus grande que les ouvertures de tuyère (16).

10. Dispositif selon l'une des revendications 1 à 9, dans lequel l'élément déformable (28; 28a bis 28e) est adjacent aux zones à fluide (18; 18a à 18d) de telle sorte que les ouvertures (38) des zones à fluide soient obturées de manière étanche l'une par rapport à l'autre.

11. Dispositif selon l'une des revendications 1 à 9, dans lequel est disposée, entre l'élément déformable (28; 28a à 28e) et le substrat de tête doseuse (10; 10a à 10g), une couche flexible perméable à l'air, imperméable aux fluides.

12. Dispositif selon l'une des revendications 1 à 11, dans lequel sont prévues, dans le substrat de tête doseuse, des zones évidées (50) ne devant pas être remplies de liquide auxquelles est adjacent l'élément déformable.

13. Dispositif selon l'une des revendications 1 à 12, dans lequel sont prévus des conduits d'alimentation (22; 22a; 22b; 18a) destinés à alimenter des fluides vers les zones à fluide, les conduits d'alimentation étant réalisés de telle sorte que les liquides soient maintenus dans ces dernières par action capillaire.

14. Dispositif selon l'une des revendications 1 à 13, dans lequel sont formés des conduits d'alimentation (22; 22a; 22b; 18a) qui relient chacune des zones à fluide à une zone d'alimentation (24; 24a à 24c; 66), les ouvertures de tuyère (16; 16a) étant disposées dans un premier motif sur une première surface du substrat de tête doseuse et les zones d'alimentation étant disposées dans un deuxième motif dans une deuxième surface du substrat de tête doseuse opposée à la première surface.

15. Dispositif pour déposer une pluralité de microgouttelettes sur un substrat selon la revendication 1, dans lequel
chaque zone à fluide présente une zone à fluide tampon (114) séparée ;
l'élément déformable (110) est adjacent aux zones à fluide tampons ; et
le dispositif d'actionnement actionne l'élément déformable (110) de sorte que l'élément déformable se déforme, pour former les zones à fluide tampons.

16. Procédé pour déposer une pluralité de microgouttelettes sur un substrat, aux étapes suivantes consistant à :
générer chaque fois une zone à fluide remplie de liquide (18; 18a à 18d; 20; 20a; 20b) à une pluralité d'ouvertures de tuyère (16; 16a) ;
disposer un élément déformable (28; 28a à 28e) adjacent à la pluralité de zones à fluide et en appui sur des cloisons séparant les zones à fluide l'une de l'autre ; et
refouler du liquide hors de chacune des zones à fluide en générant une déformation de l'élément déformable (28 ; 28a à 28e), pour former les zones à fluide, de sorte que par le refoulement de liquide par suite de la déformation de l'élément déformable soit expulsée une microgouttelette hors de chaque ouverture de tuyère.

17. Procédé pour déposer une pluralité de microgouttelettes sur un substrat selon la revendication 16, dans lequel
chaque zone à fluide présente une zone à fluide tampon (114) séparée, et
du liquide est refoulé de chacune des zones à fluide en générant une déformation de l'élément déformable (110) adjacent aux zones à fluide tampons, pour former les zones à fluide tampons.
